(19) Europäisches Patentamt
European Patent Office
Office européen des brevets

(11) EP 3 359 397 B1

(12) **FASCICULE DE BREVET EUROPEEN**

(45) Date de publication et mention de la délivrance du brevet:
**04.12.2019 Bulletin 2019/49**

(21) Numéro de dépôt: **16788034.3**

(22) Date de dépôt: **07.10.2016**

(51) Int Cl.:
***B60C 1/00*** (2006.01) ***C08C 19/22*** (2006.01)
***C08C 19/25*** (2006.01) ***C08C 19/44*** (2006.01)
***C08L 15/00*** (2006.01) ***C08L 57/02*** (2006.01)
***C08K 3/36*** (2006.01)

(86) Numéro de dépôt international:
**PCT/EP2016/073950**

(87) Numéro de publication internationale:
**WO 2017/060396 (13.04.2017 Gazette 2017/15)**

(54) **COMPOSITION DE CAOUTCHOUC CONTENANT UN ÉLASTOMÈRE DIÉNIQUE POSSÉDANT UNE FONCTION EN MILIEU DE CHAÎNE**

KAUTSCHUKZUSAMMENSETZUNG MIT EINEM DIENELASTOMER MIT EINER FUNKTION IN DER KETTENMITTE

RUBBER COMPOSITION CONTAINING A DIENE ELASTOMER HAVING A FUNCTION IN THE MIDDLE OF THE CHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2015 FR 1559594**

(43) Date de publication de la demande:
**15.08.2018 Bulletin 2018/33**

(73) Titulaire: **Compagnie Générale des Etablissements Michelin**
**63000 Clermont-Ferrand (FR)**

(72) Inventeurs:
- **DE-GAUDEMARIS, Benoît**
**63040 Clermont-Ferrand Cedex 9 (FR)**
- **NOURRY, Christine**
**63040 Clermont-Ferrand Cedex 9 (FR)**
- **VOISIN, Floriandre**
**63040 Clermont-Ferrand Cedex 9 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2015/018599**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 359 397 B1

## Description

L'invention se rapporte à une composition de caoutchouc comprenant un élastomère diénique modifié par un groupe alcoxysilane, éventuellement partiellement ou totalement hydrolysé, porteur ou non d'une autre fonction.

Depuis que les économies de carburant et la nécessité de préserver l'environnement sont devenues une priorité, il est souhaitable de produire des mélanges possédant une hystérèse aussi faible que possible afin de pouvoir les mettre en œuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

Idéalement, par exemple, une bande de roulement de pneumatique doit obéir à un grand nombre d'exigences techniques, souvent antinomiques, parmi lesquelles une résistance élevée à l'usure tout en offrant au pneumatique une faible résistance au roulement.

Par ailleurs la réduction de l'hystérèse des mélanges, gage d'une réduction de la résistance au roulement, doit également se faire en conservant intacte l'aptitude à la mise en œuvre, en particulier à cru, des mélanges, tout en maintenant la résistance au fluage des élastomères.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante telle que la silice, il a été proposé d'utiliser des polymères diéniques fonctionnalisés par des dérivés alcoxysilanes notamment en combinant ou non la fonctionnalisation par des fonctions alcoxysilanes à la fonctionnalisation par d'autres fonctions, notamment des fonctions amine, imine, époxy ou encore thiol.

Ainsi, le document WO 2007047943 A1 décrit la fonctionnalisation en extrémité de chaîne polymère par réaction d'un élastomère vivant avec un composé alcoxysilane porteur d'une fonction thiol protégée en vue d'améliorer l'hystérèse des compositions de caoutchouc renforcée contenant l'élastomère fonctionnalisé.

Les Demanderesses ont décrit dans les documents EP 0 692 492 A1 et EP 0 692 493 A1 la fonctionnalisation d'élastomères diéniques en extrémité et en milieu de chaîne par des composés alcoxysilane porteur d'une fonction époxy en vue d'améliorer le renforcement ainsi que l'hystérèse des compositions de caoutchouc renforcée contenant l'élastomère fonctionnalisé.

La fonctionnalisation par des composés alcoxysilane porteurs d'une fonction aminée a été largement décrite dans la littérature brevet. Les élastomères fonctionnalisés en bout de chaîne par des fonctions alcoxysilanes portant un groupement aminé ont été associés aussi bien à de la silice qu'à du noir de carbone, voire un mélange de ces deux charges, dans des compositions de caoutchouc destinées à la fabrication de pneumatiques.

Les Demanderesses ont décrit quant à elles, dans le document WO 2009133068 A1, un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne élastomère diénique. Cet élastomère fonctionnalisé en milieu de chaîne confère à la composition le contenant des propriétés mécaniques et dynamiques améliorées, notamment une hystérèse améliorée, tout en conservant une mise en œuvre à cru satisfaisante, en vue notamment d'une utilisation en bande de roulement pour pneumatique.

Outre l'amélioration des propriétés hystérétiques, qui induit une baisse de la résistance au roulement du pneumatique, l'augmentation de la résistance à l'abrasion, permettant d'apprécier la résistance à l'usure d'un pneumatique, est une autre performance recherchée pour les compositions de caoutchouc destinées à la fabrication de pneumatiques.

Pour améliorer la résistance à l'usure et à l'abrasion d'un pneumatique, on le sait, une certaine rigidité de la bande de roulement est souhaitable. Mais l'expérience montre qu'une telle rigidification de la bande de roulement pénalise fréquemment, le cas échéant souvent de manière rédhibitoire, les propriétés de résistance au roulement, en s'accompagnant d'une augmentation importante des pertes hystérétiques de la composition de caoutchouc.

Il est par ailleurs une préoccupation constante des concepteurs de matériaux destinés à la fabrication de pneumatiques d'améliorer les compromis de propriétés mécaniques et dynamiques des compositions de caoutchouc en vue d'améliorer les performances du pneumatique les contenant, sans pour autant pénaliser les étapes de sa fabrication ou les propriétés de l'élastomère. Ainsi, par exemple, l'amélioration du compromis de propriétés ne doit pas de faire au détriment du fluage de l'élastomère qui entraîne des inconvénients importants lors du transport et du stockage des caoutchoucs.

Il a été proposé par le passé d'ajouter des élastomères couplés ou étoilés à l'aide d'agents de couplage ou d'étoilage supplémentaires à l'étain ou au silicium pour limiter le fluage. Toutefois, les associations illustrées par le passé ne conduisent pas toujours à une composition de caoutchouc renforcée dont le compromis mise en œuvre / hystérèse est satisfaisant pour une application en pneumatique.

Le problème technique que se propose de résoudre l'invention est d'améliorer encore le compromis de propriétés hystérèse et abrasion d'une composition de caoutchouc sans pénaliser sa mise en œuvre, en vue d'une application en pneumatique, ou les propriétés intrinsèques de ses composants, par exemple les propriétés de l'élastomère contenu dans cette composition, notamment sa résistance au fluage.

Ce but est atteint en ce que les inventeurs viennent de découvrir de manière surprenante au cours de leurs recherches qu'un élastomère diénique modifié de composition spécifique comprenant un élastomère diénique linéaire fonctionnalisé majoritairement en milieu de chaîne par un groupe alcoxysilane, dont la résistance au fluage n'est pas pénalisé, associé à une charge renforçante et une résine plastifiante, confère aux compositions de caoutchouc à base de ces composants une amélioration du compromis hystérèse / abrasion sans pénaliser la mise en œuvre à cru.

L'invention a donc pour objet une composition de caoutchouc à base au moins d'une charge renforçante, d'une résine et d'une matrice élastomère comprenant un élastomère diénique modifié composé de :

a) au moins 70% en poids, par rapport au poids total de l'élastomère diénique modifié, d'un élastomère diénique linéaire fonctionnalisé majoritairement en milieu de chaîne par un groupe alcoxysilane, éventuellement partiellement ou totalement hydrolysé en silanol, le groupe alcoxysilane étant éventuellement porteur d'une autre fonction, l'atome de silicium du groupe alcoxysilane se situant dans la chaîne principale de l'élastomère diénique, et
b) plus de 0 et jusqu'à 30% en poids, par rapport au poids total de l'élastomère diénique modifié, d'un élastomère diénique étoilé,

la viscosité Mooney dudit élastomère diénique modifié variant de 50 à 80 et la température de transition vitreuse allant de -100°C à - 80°C, de préférence de -95°C à -80°C.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, une espèce fonctionnelle d'un élastomère diénique fonctionnalisé dite majoritaire est celle représentant la plus grande fraction pondérale parmi les espèces fonctionnalisées constituant l'élastomère diénique, par rapport au poids total de l'élastomère diénique fonctionnalisé. Dans un système comprenant un seul composé d'un certain type, celui-ci est majoritaire au sens de la présente invention.

Dans la présente description, on entend par Tg, la température de transition vitreuse d'un composé, notamment de l'élastomère diénique modifié de l'invention, mesurée selon la norme ASTM D3418.

Dans la présente description, on entend par viscosité Mooney, la viscosité Mooney ML(1+4)100 °C d'un composé, notamment de l'élastomère diénique modifié de l'invention, mesurée selon la norme ASTM D1646.

Dans la présente description, on entend par amine primaire ou secondaire une amine primaire ou secondaire protégée ou non par un groupement protecteur connu de l'homme du métier.

Dans la présente description, on entend par élastomère diénique modifié un élastomère diénique qui comporte un groupement comprenant un ou plusieurs hétéroatomes.

Ce groupement peut se situer en bout de chaîne élastomère principale linéaire. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule au moins mono fonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction de deux chaines de l'élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile. On dira alors que l'élastomère diénique est étoilé. C'est généralement un élastomère obtenu par réaction de n chaînes de l'élastomère vivant sur un agent d'étoilage, c'est à dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère fonctionnalisé, ainsi que le cas échéant d'espèces étoilées. Selon les conditions opératoires, principalement le rapport molaire de l'agent de fonctionnalisation aux chaînes vivantes, certaines espèces sont majoritaires dans le mélange.

Selon l'invention, un composant essentiel de la composition de caoutchouc est l'élastomère diénique modifié tel que décrit ci-dessus.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone.

Selon certaines variantes, les élastomères diéniques contiennent de 95 % à 100 % en poids d'unités diéniques, et de 0 à 5 % en poids d'unités vinylaromatiques, par rapport au poids de l'élastomère.

Dans le cas de copolymères, ceux-ci contiennent de 95 % à moins de 100 % en poids, de préférence de 96% à 99% en poids, d'unités diéniques, et de plus de 0 à 5 % en poids, de préférence de 1% à 4% en poids d'unités vinylaromatiques, par rapport au poids total du copolymère.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces polymères, les homopolymères du butadiène et les copolymères de butadiène-styrène (SBR) sont particulièrement préférés.

Conviennent particulièrement à titre d'homopolymères du butadiène, les polybutadiènes et en particulier ceux ayant une teneur (% molaire) en unités -1,2 comprise entre 4% et 20%, de préférence de 10 à 15% et ayant un ratio molaire en cis-1,4 / trans-1,4 allant de 1 à 0,65.

Conviennent particulièrement à titre de copolymère de butadiène-styrène, les copolymères de butadiène-styrène ayant une teneur en styrène comprise entre 0% et 5% en poids et plus particulièrement allant de 1% à 4% en poids par rapport au poids du copolymère, une teneur (% molaire) en liaisons -1,2 de la partie butadiénique comprise entre 4% et 20%, de préférence de 10 à 15%.

L'élastomère diénique peut avoir toute microstructure qui est fonction des conditions de polymérisation utilisées. Le copolymère peut être à blocs, statistique, séquencé, microséquencé, etc .... et être préparé en dispersion ou en solution. Dans le cas d'un copolymère à base d'un diène et d'un vinyl aromatique, notamment contenant du butadiène et du styrène, préférentiellement les deux monomères sont répartis statistiquement.

La microstructure de ces élastomères peut être déterminée par la présence ou non d'un agent polaire et les quantités d'agent polaire employées lors de l'étape de polymérisation anionique. Préférentiellement, lorsque l'élastomère diénique est à base d'un diène et de styrène, un agent polaire est utilisé lors de l'étape de polymérisation dans des quantités telles qu'il favorise la répartition statistique du styrène le long des chaînes polymères tout en conservant le taux de liaisons -1,2 entre 4% et 20%, de préférence de 10 à 15%.

L'élastomère diénique fonctionnalisé en milieu de chaîne a) et l'élastomère diénique étoilé b) peuvent avoir avant fonctionnalisation et étoilage la même microstructure ou une microstructure différente.

De préférence, l'élastomère diénique linéaire fonctionnalisé majoritairement en milieu de chaîne a) et l'élastomère diénique étoilé b) ont avant fonctionnalisation et étoilage la même microstructure.

De préférence encore, l'élastomère diénique linéaire fonctionnalisé majoritairement en milieu de chaîne a) et l'élastomère diénique étoilé b) ont avant fonctionnalisation et étoilage la même microstructure et la même macrostructure.

Par élastomère diénique linéaire fonctionnalisé majoritairement en milieu de chaîne, soit l'élastomère a), on entend selon l'invention le mélange des espèces linéaires de l'élastomère fonctionnalisé, à savoir les chaînes linéaires fonctionnalisées en extrémité de chaîne et les chaînes linéaires fonctionnalisées en milieu de chaîne, ces dernières étant majoritaires dans ce mélange et représentent de préférence au moins 50% en poids du poids total de l'élastomère

a), plus préférentiellement encore au moins 80% en poids.

Selon un mode de réalisation préféré, l'élastomère diénique modifié selon l'invention comprend au moins 75% en poids, voire au moins 80% en poids, par rapport au poids total de l'élastomère diénique modifié, de l'élastomère diénique linéaire fonctionnalisé majoritairement en milieu de chaîne a).

Selon un autre mode de réalisation préféré, l'élastomère diénique modifié selon l'invention comprend au plus 25% en poids, voire au plus 20% en poids, par rapport au poids total de l'élastomère diénique modifié, de l'élastomère diénique étoilé b).

Selon encore un autre mode de réalisation préféré, l'élastomère diénique modifié selon l'invention comprend au moins 5% en poids par rapport au poids total de l'élastomère diénique modifié, de l'élastomère diénique étoilé b).

Selon un mode de réalisation particulièrement préféré du fait d'un compromis mise en œuvre à cru / hystérèse / abrasion davantage amélioré tout en conservant intacte la résistance au fluage de l'élastomère, l'élastomère diénique modifié selon l'invention comprend au moins 75% en poids, par rapport au poids total de l'élastomère diénique modifié, de l'élastomère diénique linéaire fonctionnalisé majoritairement en milieu de chaîne a) et au plus 25% en poids, par rapport au poids total de l'élastomère diénique modifié, de l'élastomère diénique étoilé b). Plus particulièrement alors, l'élastomère diénique modifié selon l'invention comprend au moins 5% en poids par rapport au poids total de l'élastomère diénique modifié, de l'élastomère diénique étoilé b).

L'élastomère diénique étoilé b) est de préférence un élastomère diénique étoilé à base d'étain ou de silicium.

L'élastomère diénique étoilé b) est de préférence un élastomère diénique étoilé à trois ou quatre branches.

Selon un mode de réalisation particulièrement préféré de l'invention, l'élastomère diénique étoilé b) est un élastomère étoilé à trois branches par un groupement comprenant un atome de silicium porteur ou non d'une autre fonction susceptible d'interagir avec une charge renforçante, l'atome de silicium étant substitué par les trois branches de l'élastomère diénique. La substitution sur l'atome de silicium est avantageusement identique à celle de l'élastomère diénique a), car en découle ainsi l'utilisation d'un seul agent de fonctionnalisation.

Selon une première variante de l'invention, l'élastomère diénique a) ne comporte pas d'autre fonction que le groupe alcoxysilane, éventuellement partiellement ou totalement hydrolysé en silanol, comprenant l'atome de silicium directement lié à la chaîne élastomérique.

Selon une deuxième variante de l'invention, l'élastomère diénique a) comporte également une autre fonction susceptible d'interagir avec une charge renforçante, cette fonction étant avantageusement portée par le silicium du groupe alcoxysilane, directement ou par l'intermédiaire d'un groupe espaceur. Ceci s'entend comme n'excluant pas le fait que le groupe alcoxysilane comprenant l'atome de silicium directement lié à la chaîne élastomérique interagit de manière privilégiée avec la charge renforçante.

On entend par "groupe alcoxysilane interagissant de manière privilégiée avec la charge renforçante" ou "fonction susceptible d'interagir avec une charge renforçante", tout groupe alcoxysilane ou fonction autre capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Le radical alcoxy du groupe alcoxysilane peut être de formule R'O-, où R' représente un groupe alkyle, substitué ou non substitué, en $C_1$-$C_{10}$, voire en $C_1$-$C_8$, de préférence un groupe alkyle en $C_1$-$C_4$, plus préférentiellement méthyle et éthyle.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en $C_1$-$C_{10}$, de préférence alkyle en $C_1$-$C_4$, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en $C_1$-$C_{10}$, de préférence alkyle en $C_1$-$C_4$, plus préférentiellement un radical méthyle ou éthyle, ou alors la diphénylphosphine. Par exemple, conviennent les groupements métylphosphino-, diméthylphosphino-, éthylphosphino-,

diéthylphosphino, éthylméthylphosphino- et diphénylphosphino-.

Selon la deuxième variante de l'invention, l'autre fonction susceptible d'interagir avec une charge renforçante peut être directement liée à l'atome de silicium lui-même directement lié à l'élastomère diénique.

Selon la deuxième variante de l'invention, l'autre fonction susceptible d'interagir avec une charge renforçante et l'atome de silicium directement lié à l'élastomère diénique peuvent être liés par l'intermédiaire d'un groupement espaceur qui peut être un atome ou un groupe d'atomes. Le groupement espaceur peut être un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$ et peut contenir un ou plusieurs radicaux aromatiques et/ou un ou plusieurs hétéroatomes. Le radical hydrocarboné peut éventuellement être substitué.

De manière préférée, le groupement espaceur est un radical hydrocarboné divalent, linéaire ou ramifiée, aliphatique en $C_1$-$C_{18}$, plus préférentiellement un radical hydrocarboné divalent linéaire aliphatique, plus préférentiellement encore le radical hydrocarboné divalent linéaire en $C_2$ ou $C_3$.

Les différents aspects, préférentiels ou non, qui précèdent et qui concernent notamment la nature de l'autre fonction susceptible d'interagir avec une charge renforçante, la nature du groupement espaceur, la nature de l'élastomère diénique, la nature de la fonction comprenant l'atome de silicium et les proportions des différentes espèces, sont combinables entre eux sous réserve de leur compatibilité.

A titre très préférentiel selon la deuxième variante selon laquelle l'élastomère diénique a) comporte également une autre fonction susceptible d'interagir avec une charge renforçante, l'autre fonction susceptible d'interagir avec une charge renforçante est une amine primaire, secondaire ou tertiaire. Cette mise en œuvre de la deuxième variante de l'invention est particulièrement avantageuse du fait de l'amélioration des propriétés hystérétiques.

De préférence, la fonction susceptible d'interagir avec une charge renforçante est une fonction amine tertiaire, de préférence diéthylamine ou diméthylamine.

Selon des variantes avantageuses de l'invention, au moins une quelconque des caractéristiques suivantes est respectée, au moins deux, au moins trois, au moins quatre, au moins cinq et de préférence toutes :

- l'élastomère diénique étoilé b) est un élastomère étoilé à trois branches par un groupement comprenant un atome de silicium porteur d'une autre fonction susceptible d'interagir avec une charge renforçante,
- l'autre fonction susceptible d'interagir avec une charge renforçante est une amine tertiaire, plus particulièrement un groupement diéthylamino- ou diméthylamino-,
- le groupement espaceur est un radical hydrocarboné linéaire en $C_1$-$C_{18}$, plus préférentiellement encore le radical hydrocarboné linéaire en $C_2$ ou $C_3$,
- le groupe alcoxysilane est un méthoxysilane ou éthoxysilane, éventuellement partiellement ou totalement hydrolysé en silanol,
- l'élastomère diénique est un polymère de butadiène, plus particulièrement un homopolymère de butadiène ou un copolymère butadiène-styrène,
- l'élastomère diénique modifié comprend au moins 75% en poids de l'élastomère diénique linéaire fonctionnalisé majoritairement en milieu de chaîne a) et au plus 25% en poids de l'élastomère diénique étoilé b), par rapport au poids total de l'élastomère diénique modifié.

Ainsi très préférentiellement, l'élastomère modifié selon l'invention, est un élastomère diénique pour lequel :

- l'élastomère diénique étoilé b) est un élastomère étoilé à trois branches par un groupement comprenant un atome de silicium porteur d'un groupement diéthylamino- ou diméthylamino
- le groupement espaceur est un radical hydrocarboné linéaire en $C_3$,
- le groupe alcoxysilane est un méthoxysilane ou éthoxysilane, éventuellement partiellement ou totalement hydrolysé en silanol,
- l'élastomère diénique est un homopolymère de butadiène ou un copolymère butadiène-styrène,
- l'élastomère diénique modifié comprend au moins 75% en poids de l'élastomère diénique linéaire fonctionnalisé majoritairement en milieu de chaîne a) et au plus 25% en poids de l'élastomère diénique étoilé b), par rapport au poids total de l'élastomère diénique modifié.

L'élastomère diénique modifié selon l'invention peut être obtenu par un procédé tel que décrit ci-après.

Selon l'une quelconque des variantes de l'invention, la première étape de ce procédé de préparation de l'élastomère diénique modifié est la polymérisation anionique d'au moins un monomère diène conjugué en présence d'un initiateur de polymérisation.

En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. De

préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi), l'isobutyllithium, etc ... Conviennent également comme initiateurs organolithiens, ceux comportant une liaison amine-lithium. Des composés représentatifs sont les amidures de lithium obtenus à partir d'une amine secondaire cyclique, telle que la pyrrolidine et l'hexaméthylèneimine.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu.

On effectue généralement la polymérisation à une température comprise entre 20 °C et 150 °C et de préférence voisine de 30 °C à 120 °C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique modifié selon l'invention.

Selon une première variante de préparation de l'élastomère diénique modifié selon l'invention, on mélange l'élastomère diénique linéaire fonctionnalisé majoritairement en milieu de chaîne a) et l'élastomère diénique étoilé b), dans les proportions appropriées.

L'élastomère diénique fonctionnalisé en milieu de chaîne a) peut être obtenu avantageusement par réaction du bout de chaîne vivant avec un agent de couplage susceptible d'introduire en milieu de chaîne un groupe alcoxysilane, éventuellement partiellement ou totalement hydrolysé en silanol, porteur ou non d'une autre fonction, Le cas échéant lorsque l'autre fonction est une amine, la fonctionnalisation en milieu de chaîne de l'élastomère diénique a) peut être obtenue notamment selon les modes opératoires décrits dans la demande de brevet WO2009133068A1, dont la description est intégrée par référence.

L'élastomère diénique étoilé b) peut être obtenu de manière connue en soi par réaction du bout de chaîne vivant avec un agent d'étoilage, c'est à dire toute molécule multifonctionnelle, la fonction étant tout type de groupement chimique connu par l'homme de l'art pour réagir avec un bout de chaîne vivant.

Le mélangeage des deux élastomères peut s'effectuer dans un solvant inerte par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. On effectuera alors le mélangeage à une température comprise entre 20°C et 120°C et de préférence voisine de 30°C à 110°C.

Selon une deuxième variante de préparation de l'élastomère diénique modifié selon l'invention, l'élastomère diénique vivant issu de l'étape de polymérisation est soumis à la réaction d'un agent d'étoilage et à celle d'un agent de couplage susceptible d'introduire en milieu de chaîne polymérique un groupe alcoxysilane, hydrolysable ou non en silanol, par substitution de l'atome de silicium par une ou deux chaînes de l'élastomère diénique, le groupe alcoxysilane étant éventuellement porteur d'une autre fonction susceptible d'interagir avec une charge renforçante au sein d'une composition de caoutchouc.

L'agent de couplage utilisable selon ces deux variantes de synthèse de l'invention est porteur d'une fonction alcoxysilane hydrolysable en fonction silanol ou encore d'une fonction alcoxysilane non hydrolysable, et éventuellement d'une fonction susceptible d'interagir avec une charge renforçante, les deux fonctions étant directement liées entre elles ou par l'intermédiaire d'un groupement espaceur. La fonction susceptible d'interagir avec une charge renforçante et le groupement espaceur sont tels que définis plus haut.

L'agent de couplage peut être représenté par la formule (I) suivante :

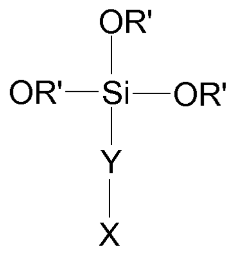

Formule (I)

dans laquelle,

- Y est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{18}$, plus préférentiellement

un radical hydrocarboné divalent linéaire aliphatique, plus préférentiellement encore le radical hydrocarboné linéaire en $C_3$.

- X est un atome d'hydrogène ou une fonction susceptible d'interagir avec une charge renforçante,
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

La fonction susceptible d'interagir avec une charge renforçante est telle que définie plus haut.

La fonction susceptible d'interagir avec une charge renforçante est préférentiellement une fonction amine primaire, secondaire ou tertiaire.

Dans le cas de l'amine primaire, l'atome d'azote peut alors être substitué par deux groupements protecteurs, notamment deux radicaux trialkyl silyle, le groupement alkyle ayant 1 à 4 atomes de carbone.

Dans le cas de l'amine secondaire, l'atome d'azote peut alors être substitué par un groupement protecteur, notamment un radical trialkyl silyle, le groupement alkyle ayant 1 à 4 atomes de carbone, et un radical alkyle en $C_1$-$C_{10}$, de préférence alkyle en $C_1$-$C_4$, plus préférentiellement un radical méthyle ou éthyle.

Dans le cas d'une amine tertiaire, l'atome d'azote peut alors être substitué par deux groupements, identiques ou différents, pouvant être un radical alkyle en $C_1$-$C_{10}$, de préférence alkyle en $C_1$-$C_4$, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone.

On peut citer par exemple à titre d'agent de couplage les alkyltrialcoxysilanes, les (N,N-dialkylaminopropyl)trialcoxysilanes, les (N-alkylaminopropyl)trialcoxysilanes dont la fonction amine secondaire est protégée par un groupement trialkyl silyl et les (aminopropyl)trialcoxysilanes dont la fonction amine primaire est protégée par deux groupements trialkyl silyle.

Préférentiellement, l'agent de couplage peut être choisi parmi le 3-(N,N-diméthylaminopropyl)triméthoxysilane, le 3-(N,N-diméthylaminopropyl)triéthoxysilane, le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de couplage est le 3-(N,N-diméthylaminopropyl)triméthoxysilane.

Préférentiellement, l'agent de couplage peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de couplage est le 3-(N,N-méthyltriméthylsilylaminopropyl)triméthoxysilane.

Préférentiellement, l'agent de couplage peut être choisi parmi le 3-(N,N-bis(triméthylsilyl)aminopropyl)triméthoxysilane et le 3-(N,N-bis(triméthylsilyl)aminopropyl)triéthoxysilane. Plus préférentiellement, l'agent de couplage est le 3-(N,N-bis(triméthylsilyl)aminopropyl)triméthoxysilane.

Avantageusement, lorsque la fonction susceptible d'interagir avec une charge renforçante est une fonction amine, celle-ci est tertiaire et l'agent de couplage est alors préférentiellement le 3-(N,N-diméthylaminopropyl)triméthoxysilane.

La fonction susceptible d'interagir avec une charge renforçante peut également être une fonction isocyanate. Préférentiellement alors, l'agent de fonctionnalisation est choisi parmi le 3-(isocyanatopropyl)triméthoxysilane et le 3-(isocyanatopropyl)triéthoxysilane.

La fonction susceptible d'interagir avec une charge renforçante peut également être une fonction imine. Préférentiellement alors, l'agent de fonctionnalisation est choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole, N-(3-triéthoxysilylpropyl)-4,5-imidazole.

La fonction susceptible d'interagir avec une charge renforçante peut également être une fonction cyano. Préférentiellement alors, l'agent de fonctionnalisation est choisi parmi le 3-(cyanopropyl)triméthoxysilane et le 3-(cyanopropyl)triéthoxysilane.

La fonction susceptible d'interagir avec une charge renforçante peut également être une fonction thiol, protégée ou non. On peut citer à titre d'exemple les (S-trialkylsilylmercaptoalkyll)trialcoxysilanes. Préférentiellement alors, l'agent de fonctionnalisation est choisi parmi le (S-triméthylsilylmercaptopropyl)triméthoxysilane, le (S-triméthylsilylmercaptopropyl)triéthoxysilane, le (S-tert-butyldiméthylsilylmercaptopropyl)triméthoxysilane, le (S-tert-butyldiméthylsilylmercaptopropyl)triéthoxysilane, le (S-triméthylsilylmercaptoethyl)triméthoxysilane, le (S-triméthylsilylmercaptoethyl)triéthoxysilane, le (S-tert-butyldiméthylsilylmercaptoethyl)triméthoxysilane, le (S-tert-butyldiméthylsilylmercaptoethyll)triéthoxysilane.

La fonction susceptible d'interagir avec une charge renforçante peut également être une fonction carboxylate. A titre de fonction carboxylate, on peut citer les acrylates ou les méthacrylates. Une telle fonction est de préférence un méthacrylate. Préférentiellement alors, l'agent de fonctionnalisation est choisi parmi le 3-(méthacryloyloxypropyl)triméthoxysilane, et le 3-(méthacryloyloxypropyl)triéthoxysilane.

La fonction susceptible d'interagir avec une charge renforçante peut également être une fonction époxyde. Préférentiellement alors, l'agent de fonctionnalisation est choisi parmi le 2-(glycidyloxyéthyl)triméthoxysilane, le 2-(glycidyloxyéthyl)triéthoxysilane le 3-(glycidyloxypropyl)triméthoxysilane, le 3-(glycidyloxypropyl)triéthoxysilane, le 2-(3,4-époxycyclohexyl)-éthyltriméthoxysilane, le 2-(3,4-époxycyclohexyl)-éthyltriéthoxysilane.

La fonction susceptible d'interagir avec une charge renforçante peut également être une fonction phosphine primaire, protégée ou non, secondaire, protégée ou non, ou tertiaire. Préférentiellement alors, l'agent de fonctionnalisation est choisi parmi le 3-(P,P-bistriméthylsilylphosphinopropyl)triméthoxysilane, le 3-(P,P-bistriméthylsilylphosphinopropyl)triéthoxysilane, le 3-(méthyltriméthylsilylphosphinopropyl)triméthoxysilane, le 3-(méthyltriméthylsilylphosphinopropyl)triéthoxysilane, le 3-(éthyltriméthylsilylphosphinopropyl)triméthoxysilane, le 3-(éthyltriméthylsilylphosphinopropyl)triéthoxysilane, le 3-(diméthylphosphinopropyl)triméthoxysilane, le 3-(diméthylphosphinopropyl)triéthoxysilane, le 3-(diéthylphosphinopropyl)triméthoxysilane, le 3-(diéthylphosphinopropyl)triéthoxysilane, le 3-(éthylméthylphosphinopropyl)triméthoxysilane, le 3-(éthylméthylphosphinopropyl)triéthoxysilane, le 3-(diphénylphosphinopropyl)triméthoxysilane, le 3-(diphénylphosphinopropyl)triéthoxysilane.

Le rapport molaire entre l'agent de couplage et l'initiateur des chaînes polymères vivantes varie de 0,30 à 0,80, préférentiellement de 0,40 à 0,65 et encore plus préférentiellement de 0,45 à 0,55.

Selon l'une quelconque des variantes de préparation de l'élastomère diénique modifié de l'invention, les agents d'étoilage sont, à titre préférentiel, des agents à base d'étain ou de silicium de fonctionnalité supérieure à 2. De tels agents d'étoilage sont connus de l'homme du métier. Ils comprennent non seulement des composés trihalogénés de l'étain et du silicium tels SnR1X'3, SnHX'3, SiR1X'3, SiHX'3, mais encore SnX'4, SiX'4, voire également des composés alcoxylés du silicium, notamment les trialcoxysilanes, substitués ou non par une fonction susceptible d'interagir avec une charge renforçante. Dans ces formules R1 est un groupement alkyle ou aralkyle possédant de 1 à 20 atomes de carbone et X' un halogène, préférentiellement $C_1$, et la fonction susceptible d'interagir avec une charge renforçante est telle que définie plus haut.

Selon un mode de réalisation particulièrement avantageux de la deuxième variante de préparation de l'élastomère diénique modifié selon l'invention, l'agent de couplage et l'agent d'étoilage sont un seul et même composé. Selon ce mode de réalisation avantageux, la fonctionnalisation peut avantageusement s'effectuer en continu et notamment selon les modes opératoires décrits dans la demande WO 2015018599 A1.

Selon un autre mode de réalisation de la deuxième variante de préparation de l'élastomère diénique modifié selon l'invention, l'agent de couplage et l'agent d'étoilage sont distincts. Selon ce mode de réalisation particulier, la fonctionnalisation de l'élastomère diénique vivant issu de l'étape de polymérisation peut s'effectuer à une température variant de 20 à 120°C, en présence dans un premier temps d'une quantité appropriée d'un agent d'étoilage pour étoiler au plus 30% en poids de l'élastomère diénique vivant. Puis, dans un deuxième temps, on fonctionnalise les chaînes vivantes restantes de l'élastomère diénique par adjonction d'un agent de couplage susceptible d'introduire en milieu de chaîne polymérique le groupe alcoxysilane porteur ou non d'une fonction, préférentiellement amine primaire, secondaire ou tertiaire, susceptible d'interagir avec une charge renforçante au sein d'une composition de caoutchouc, et réaction avec cet agent.

Selon les variantes de l'invention selon lesquelles l'agent de fonctionnalisation est porteur d'une fonction amine primaire protégée ou amine secondaire protégée, le procédé de synthèse peut se poursuivre par une étape de déprotection de l'amine primaire ou secondaire. Cette étape est mise en œuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en œuvre après la réaction de modification. On peut à titre d'exemple faire réagir les chaînes fonctionnalisées par le

groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en œuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en totalité ou en partie en fonction silanol. Au moins 50%, voire au moins 80% et jusqu'à 100% molaire des fonctions peuvent ainsi être hydrolysées.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50% molaire des fonctions peuvent ainsi être hydrolysées.

L'homme du métier comprendra que ces étapes sont combinables entre elles sous réserve de compatibilité. Ainsi, le procédé de synthèse de l'élastomère diénique modifié selon l'invention peut comprendre toutes ou partie de ces étapes de déprotection, hydrolyse spécifique et stripping qui suivent l'étape de modification.

L'élastomère diénique modifié conforme à l'invention présente une résistance au fluage satisfaisante, ce qui induit une bonne tenue lors du stockage et du transport de ce caoutchouc.

Il doit être entendu que la composition de caoutchouc selon l'invention peut comprendre un ou plusieurs de ces élastomères diéniques modifiés.

Avantageusement, la composition de caoutchouc comprend à titre d'élastomère modifié selon l'invention, un élastomère diénique pour lequel au moins une quelconque des caractéristiques suivantes est respectée, au moins deux, au moins trois, au moins quatre, au moins cinq et de préférence toutes :

- l'élastomère diénique étoilé b) est un élastomère étoilé à trois branches par un groupement comprenant un atome de silicium porteur d'une autre fonction susceptible d'interagir avec une charge renforçante,
- l'autre fonction susceptible d'interagir avec une charge renforçante est une amine tertiaire, plus particulièrement un groupement diéthylamino- ou diméthylamino-,
- le groupement espaceur est un radical hydrocarboné linéaire en $C_1$-$C_{18}$, plus préférentiellement encore le radical hydrocarboné linéaire en $C_2$ ou $C_3$,
- la fonction comprenant l'atome de silicium est un méthoxysilane ou éthoxysilane, éventuellement partiellement ou totalement hydrolysé en silanol,
- l'élastomère diénique est un polymère de butadiène, plus particulièrement un homopolymère de butadiène ou un copolymère butadiène-styrène,
- l'élastomère diénique modifié comprend au moins 75% en poids de l'élastomère diénique linéaire fonctionnalisé majoritairement en milieu de chaîne a) et au plus 25% en poids de l'élastomère diénique étoilé b), par rapport au poids total de l'élastomère diénique modifié.

Préférentiellement, la composition de caoutchouc comprend à titre d'élastomère modifié selon l'invention, un élastomère diénique pour lequel :

- l'élastomère diénique étoilé b) est un élastomère étoilé à trois branches par un groupement comprenant un atome de silicium porteur d'un groupement diéthylamino- ou diméthylamino,
- l'autre fonction susceptible d'interagir avec une charge renforçante est une amine tertiaire, plus particulièrement un groupement diéthylamino- ou diméthylamino-,
- le groupement espaceur est un radical hydrocarboné linéaire en $C_3$,
- le groupe alcoxysilane est un méthoxysilane ou éthoxysilane, éventuellement partiellement ou totalement hydrolysé en silanol,
- l'élastomère diénique est un homopolymère de butadiène ou un copolymère butadiène-styrène,
- l'élastomère diénique modifié comprend au moins 75% en poids de l'élastomère diénique linéaire fonctionnalisé majoritairement en milieu de chaîne a) et au plus 25% en poids de l'élastomère diénique étoilé b), par rapport au

poids total de l'élastomère diénique modifié.

L'élastomère diénique modifié selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères de butadiène-éthylène (EBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Lorsque l'élastomère conventionnel utilisé en coupage est du caoutchouc naturel et/ou un ou plusieurs polymères diéniques comme par exemple les polybutadiènes, les polyisoprènes, les copolymères butadiène-styrène ou butadiène-styrène-isoprène, cet élastomère ou ces élastomères, modifiés ou non, peuvent alors être présents de 1 à 70 parties en poids pour 100 parties d'élastomère diénique modifié selon l'invention.

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend majoritairement en masse l'élastomère diénique modifié selon l'invention.

Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$, encore plus préférentiellement entre 130 et 300 $m^2/g$, voire entre 130 et 250 $m^2/g$. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 10 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge renforçante, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Un tel agent de couplage ne doit pas être confondu avec l'agent de couplage utilisé pour la synthèse de l'élastomère diénique modifié décrite précédemment.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice de caoutchouc et à un abaissement de la viscosité de la composition, d'améliorer sa faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

Selon l'invention, un autre composant essentiel de la composition de caoutchouc est la résine.

De manière connue de l'homme du métier, la dénomination "résine" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné, de manière à agir comme un véritable agent diluant.

Les résines hydrocarbonées sont des polymères bien connus de l'homme du métier, utilisables en particulier comme agents plastifiants ou agents tackifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Selon un mode de réalisation particulier de l'invention, la résine hydrocarbonée présente au moins une quelconque des caractéristiques suivantes :

- une Tg supérieure à 20°C, notamment supérieure à 30°C ;
- une masse moléculaire moyenne en nombre (Mn) supérieure à 300g/mol, notamment de 400 à 1500 g/mol ;
- un indice de polymolécularité (Ip) inférieur à 3, notamment inférieur à 2 (rappel : Ip = Mw/Mn avec Mw masse moléculaire moyenne en poids).

Plus particulièrement, cette résine hydrocarbonée présente l'ensemble des caractéristiques ci-dessus.

La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué

par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, les résines d'homopolymère ou copolymère de coupe C9 (ou plus généralement d'une coupe C8 à C10), les résines d'homopolymère ou copolymère de coumarone, les esters de colophane et les mélanges de ces résines. Parmi les résines de copolymères ci-dessus, on peut citer plus particulièrement celles choisies dans le groupe constitué par les résines de copolymère (D)CPD/ C9 aromatiques, les résines de copolymère (D)CPD/ terpène, les résines de copolymère (D)CPD/ coupe C5, les résines de copolymère terpène/ vinylaromatique, les résines de copolymère coupe C5/ C9, et les mélanges de ces résines.

Le terme "terpène" regroupe ici de manière connue les monomères alpha-pinène, beta-pinène et limonène. A titre de monomère C9 conviennent par exemple le styrène, le phénol, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, l'indène, tout monomère vinylaromatique issu d'une coupe C9 (ou plus généralement d'une coupe C8 à C10).

Plus particulièrement, on peut citer encore les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C5/ styrène ou coupe C5/ coupe C9, ou encore par la société Struktol sous dénomination "40 MS" ou "40 NS" (mélanges de résines aromatiques et/ou aliphatiques).

Le taux de résine hydrocarbonée est préférentiellement compris entre 20 et 200 pce, plus préférentiellement dans un domaine de 50 à 150 pce. En dessous de ces minima, la performance adhérence peut s'avérer insuffisante, alors qu'au-delà des maxima préconisés, la mise en œuvre du matériau sera difficile par un niveau de collant trop important.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants liquides tels que des huiles, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 180 °C, d'un premier temps de travail thermomécanique des constituants de la composition comprenant l'élastomère diénique modifié selon l'invention et une charge renforçante, à l'exception d'un système de réticulation, puis

(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique modifié selon le procédé décrit plus haut.

L'invention a également pour objet un article semi-fini en caoutchouc pour pneumatique, comprenant une composition de caoutchouc selon l'invention, réticulable ou réticulée, ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

La composition de caoutchouc renforcée selon l'invention peut se présenter à l'état réticulé ou à l'état non réticulé, autrement dit réticulable.

En raison du compromis hystérèse / mise en œuvre à cru / abrasion amélioré tout en maintenant la résistance

au fluage de l'élastomère qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement et améliorant la résistance à l'usure.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

### Mesures et tests utilisés

#### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Une courbe d'étalonnage reliant le logarithme de la masse molaire (logM) au temps d'élution (te) est préalablement réalisée avec des étalons, et modélisée.

Pour les élastomères, il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45μm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 μL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique (par rapport à la masse du polymère) de motifs type styrène, 23% massique (par rapport à la partie butadiénique) de motifs type 1-2 et 50% massique (par rapport à la partie butadiénique) de motifs type 1-4 trans.

Pour la résine hydrocarbonée, la macrostructure (Mw, Mn, Ip et Mz) est déterminée par chromatographie d'exclusion stérique (SEC) sur la base des normes ISO 16014 (Determination of average molecular mass and molecular mass distribution of polymers using size exclusion chromatography), ASTM D5296 (Molecular Weight Averages and molecular weight distribution of polystyrene by High performance size exclusion chromatography), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 μm, en utilisant par exemple une seringue à usage unique montée d'un filtre. Un volume de 100 μl est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Les masses molaires moyennes calculées pour les résines sont relatives à une courbe d'étalonnage réalisée pour des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55 en log de M entre chaque.

On peut utiliser des kits étalons certifiés (ISO 13885 et DIN 55672) comme par exemple les kits de vials de la société PSS (polymer standard service, référence PSS-pskitr11-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

Vial noir : Mp = 1 220, 4 850, 15 500 et 67 500 g/mol.

Vial bleu : Mp = 376, 3 470, 10 400, 46 000 g/mol.
Vial jaune : Mp = 266, 1 920, 7 200, 28 000 g/mol.
PS162 : Mp = 162 g/mol

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

| *Numéro* | *Marque* | *Domaine de masses molaires (g/mol)* | *Longueur (mm)* | *Diamètre interne (mm)* | *Taille des particules (μm)* | *Désignation commerciale* | *Références (à titre indicatif)* |
|---|---|---|---|---|---|---|---|
| **Colonnes 1 et 2** | **Polymer Laboratories** | **200 - 400000** | **300** | **7,5** | **5** | **MIXED-D** | **PL1110-6504** |
| **Colonnes 3 et 4** | **Polymer Laboratories** | **200 - 30000** | **300** | **7,5** | **3** | **MIXED-E** | **PL1110-6300** |

De manière générale, pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$MZ = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

dans lesquelles Ai est l'amplitude du signal du détecteur refractométrique correspondant à la masse Mi et au temps d'élution ti.

Chromatographie d'exclusion stérique haute résolution

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 g.L$^{-1}$. Puis la solution est filtrée sur filtre de porosité 0,45 μm avant injection.

L'appareillage utilisé est une chaîne chromatographique "WATERS alliance 2695". Le solvant d'élution est le tétrahydrofurane, le débit de 0,2 ml.min$^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 μL. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

Viscosité Mooney

Pour les polymères et les compositions de caoutchouc, les viscosités Mooney $ML_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney $ML_{(1+4)}$ est exprimée en "unité Mooney" (UM, avec 1 UM = 0,83 N.m).

La différence entre la viscosité Mooney de la composition et la viscosité Mooney de l'élastomère permet de mesurer la processabilité ou mise en œuvre à cru. Plus cette différence est faible, meilleure est la mise en œuvre à cru.

Calorimétrie différentielle

Les températures de transition vitreuse (Tg) des élastomères sont déterminées à l'aide d'un calorimètre différentiel ("differential scanning calorimeter"), selon la norme ASTM E1356-08 (2014).

Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Viscosité inhérente

La viscosité inhérente des élastomères à 25 °C est déterminée à partir d'une solution d'élastomère à 0,1 $g.dL^{-1}$ dans le toluène, selon le principe suivant :

La viscosité inhérente est déterminée par la mesure du temps d'écoulement t de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 ± 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C}\ln\left[\frac{(t)}{(t_o)}\right]$$

avec :

- C : concentration de la solution de polymère dans le toluène eng.$dL^{-1}$,
- $t$ : temps d'écoulement de la solution de polymère dans le toluène en seconde,
- $t_o$ : temps d'écoulement du toluène en seconde,
- $\eta_{inh}$ : viscosité inhérente exprimée en $dL.g^{-1}$.

Cold-Flow ($CF_{(1+6)}$100°C)

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 ± 4 g d'élastomère préalablement mis sous forme de pastille (2 cm d'épaisseur et 52 mm de diamètre). Sur la pastille d'élastomère est positionné un piston calibré de 1 kg (± 5 g). L'ensemble est ensuite placé dans une étuve à 100 ± 0,5 °C.

Les conditions n'étant pas stabilisées lors de la première heure dans l'étuve, le produit extrudé à t = 1 heure est découpé puis jeté.

La mesure est ensuite poursuivie pendant 6 heures ± 5 mn, durant lesquelles le produit est laissé dans l'étuve. A l'issue des 6 heures, l'échantillon de produit extrudé est découpé puis pesé. Le résultat de la mesure est la masse d'élastomère pesée. Les résultats sont donnés en base 100 par rapport au témoin. Plus la valeur est faible plus l'élastomère résiste au fluage.

Détermination de la répartition des espèces d'un élastomère modifié.

La méthode employée est une méthode par modélisation déjà exposée dans la demande de brevet WO 2015/018599 A1 au nom des Demanderesses et décrite ci-après.

**1- Exemple de détermination du rapport de constantes cinétiques (K) du modèle cinétique de fonctionnalisation en réacteur agité discontinu**

**Détermination expérimentale du pourcentage massique des chaînes fonctionnalisées en extrémité de chaîne, en milieu de chaîne et étoilées (3 branches) et du saut de viscosité en fonction du rapport molaire 3-(N,N-diméthylaminopropyl)triméthoxysilane/n-BuLi**

Dans onze bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 $mol.L^{-1}$. Après neutralisation des impuretés dans la solution à polymériser par addition de n-Butyllithium (n-BuLi), 1,90 mL de n-BuLi à 0,097 $mol.L^{-1}$ dans le méthylcyclohexane sont ajoutés. La polymérisation est conduite à 60 °C.

Après 15 minutes, le taux de conversion en monomère atteint 95 %. Ce taux est déterminé par pesée d'un extrait séché à 140 °C, sous la pression réduite de 200 mmHg. Une bouteille témoin (bouteille n°1) est stoppée avec un excès de méthanol par rapport au lithium. La viscosité inhérente "initiale" est de 0,66 $dL.g^{-1}$. 0,88 mL d'une solution de 3-(N,N-diméthylaminopropyl)triméthoxysilane à 0,1 $mol.L^{-1}$ dans le méthylcyclohexane sont ajoutés aux solutions de polymère vivant (0,48 éq. molaire *vs* Li) contenues dans les bouteilles 2 à 9, 0,73 mL de cette même solution sont ajoutés dans la bouteille 10 (0,40 éq. molaire *vs* Li) et 1,83 mL de cette même solution sont ajoutés dans la bouteille 11 (1,0 éq. molaire vs Li). Après 15 minutes de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de *N*-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les viscosités inhérentes "finales", les sauts de viscosité définis comme les rapports des viscosités inhérentes "finales" sur la viscosité inhérente "initiale" ainsi que les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 1 ci-dessous.

**Tableau 1** - Evolution de la répartition des espèces P+PA/$P_2A$/$P_3A$ et du saut de viscosité en fonction du rapport molaire 3-(N,N-diméthylaminopropyl)triméthoxysilane/n-BuLi.

| Bouteille | Rapport molaire 3-(N,N-diméthylaminopropyl)triméthoxysilane /Li | Saut de viscosité | P+PA/$P_2A$/$P_3A$ (wt.%) |
|---|---|---|---|
| 2 | 0,48 | | 12/77/10 |
| 3 | 0,48 | | 13/77/9 |
| 4 | 0,48 | | 13/78/9 |
| 5 | 0,48 | | 13/82/5 |
| 6 | 0,48 | | 13/83/5 |

(suite)

| Bouteille | Rapport molaire 3-(N,N-diméthylaminopropyl)triméthoxysilane /Li | Saut de viscosité | P+PA/$P_2A$/$P_3A$ (wt.%) |
|---|---|---|---|
| 7 | 0,48 | | 13/83/4 |
| 8 | 0,48 | | 14/83/4 |
| 9 | 0,48 | 1,54 | 11/84/4 |
| 10 | 0,40 | 1,61 | 15/53/25 |
| 11 | 1,00 | 1,09 | 72/20/7 |

L'élastomère diénique vivant est fonctionnalisé selon le mécanisme réactionnel :

| Réaction | Mécanisme |
|---|---|
| R1 | $PLi + A \xrightarrow{k_1} PA$ |
| R2 | $PLi + PA \xrightarrow{k_2} P_2A$ |
| R3 | $PLi + P_2A \xrightarrow{k_3} P_3A$ |

où
- A représente l'agent de fonctionnalisation,
- PLi représente une chaîne élastomère vivante,
- PA représente l'élastomère fonctionnalisé en bout de chaîne,
- $P_2A$ représente l'élastomère couplé,
- $P_3A$ représente l'élastomère étoilé à trois branches, et
- $k_i$ représente la constante cinétique de la réaction $R_i$, s'effectuant selon la loi de vitesse suivante :

| Réactions | Vitesse de réaction |
|---|---|
| R1 | $V_1 = k_1[PLi][A]$ |
| R2 | $V_2 = k_2 [PLi][PA]$ |
| R3 | $V_3=k_3[PLi][P_2A]$ |

où

- $k_1$, $k_2$ et $k_3$ sont les constantes cinétiques respectivement des réactions R1, R2 et R3 (exprimées en $(m^3/mol).s^{-1}$),
- [PLi] est la concentration de chaînes vivantes (exprimée en $mol/m^3$),
- [A] est la concentration en agent de modification A (exprimée en $mol/m^3$),
- [PA] est la concentration en élastomère fonctionnalisé en bout de chaîne (exprimée en $mol/m^3$),
- $[P_2A]$ est la concentration en élastomère couplé (exprimée en $mol/m^3$),
- $[P_3A]$ est la concentration en élastomère étoilé à trois branches (exprimée en $mol/m^3$),

le rapport K des constantes cinétiques défini comme: $K = \frac{k_1}{k_2} = \frac{k_2}{k_3}$ étant supérieur à 1.

Le modèle cinétique de fonctionnalisation intégré, selon l'homme d'art, à un modèle de réacteur parfaitement agité discontinu (bibliographie : Villermeaux, J; Génie de la réaction chimique; 1993) permet de déterminer la répartition des différentes espèces. De plus, les chaînes peuvent être désactivées (P) lors de l'étape de polymérisation ou/et fonctionnalisation. Ainsi, le produit final est un mélange d'élastomère désactivé (P), élastomère fonctionnalisé bout de chaîne (PA), élastomère fonctionnalisé milieu de chaîne ($P_2A$) et élastomère étoilé ($P_3A$).

Pour les points expérimentaux du Tableau 1 ci-dessus, nous avons estimé la valeur de $K=10^{2\pm1}$ selon la

description du modèle de réacteur parfaitement agité discontinu, qui représente le réacteur utilisé pour ces expériences.

La Figure 1 représente la répartition des espèces P, PA, $P_2A$ et $P_3A$ en fonction du rapport molaire agent de fonctionnalisation/chaînes polymère vivantes (PLi) : simulé (lignes) et mesuré (points).

**2- Exemple de détermination de la cinétique de fonctionnalisation en réacteur agité discontinu**

**Détermination expérimentale du pourcentage massique des chaînes fonctionnalisées en extrémité de chaîne, en milieu de chaîne et étoilées (3 branches) en fonction du temps de couplage avec le 3-(N,N-diméthylaminopropyl)triméthoxysilane (~ 0,5 éq. mol vs Li)**

Dans vingt-deux bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 $mol.L^{-1}$. Après neutralisation des impuretés dans la solution à polymériser par addition de n-Butyllithium (n-BuLi), 1,90 mL de n-BuLi à 0,097 $mol.L^{-1}$ dans le méthylcyclohexane sont ajoutés. La polymérisation est conduite à 60 °C.

Après 15 minutes, le taux de conversion en monomère atteint 95 %. Ce taux est déterminé par pesée d'un extrait séché à 140 °C, sous la pression réduite de 200 mmHg. 0,88 mL d'une solution de 3-(N,N-diméthylaminopropyl)triméthoxysilane à 0,1 $mol.L^{-1}$ dans le méthylcyclohexane sont ajoutés aux solutions de polymère vivant (0,48 éq. molaire vs Li) contenues dans les vingt et une bouteilles restantes. Après 10 secondes (bouteilles 12, 13 et 14), 15 secondes (bouteilles 15, 16 et 17), 20 secondes (bouteilles 18, 19 et 20), 30 secondes (bouteilles 21 et 22), 2 minutes (bouteille 23) et 15 minutes (bouteilles 24, 25, 26, 27, 28, 29, 30, 31 et 32) de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de *N*-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les pourcentages massiques des chaînes désactivées (P), des chaînes fonctionnalisées en extrémité de chaîne (PA), en milieu de chaîne ($P_2A$) et étoilées ($P_3A$) sont présentées dans le Tableau 2 ci-dessous.

**Tableau 2** - Evolution de la répartition des espèces P+PA/$P_2A$/$P_3A$ en fonction du temps de réaction avec le 3-(N, N-diméthylaminopropyl)triméthoxysilane.

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 12 | 10 s | 23 | 76 | 1 |
| 13 | 10 s | 23 | 76 | 1 |
| 14 | 10 s | 22 | 77 | 1 |
| 15 | 15 s | 19 | 79 | 1 |
| 16 | 15 s | 20 | 79 | 1 |
| 17 | 15 s | 19 | 79 | 1 |
| 18 | 20 s | 18 | 81 | 1 |
| 19 | 20 s | 17 | 81 | 1 |
| 20 | 20 s | 18 | 81 | 1 |
| 21 | 30 s | 16 | 82 | 2 |
| 22 | 30 s | 14 | 83 | 2 |
| 23 | 2 min | 11 | 86 | 2 |
| 24 | 15 min | 12 | 77 | 10 |
| 25 | 15 min | 13 | 77 | 9 |
| 26 | 15 min | 13 | 78 | 9 |
| 27 | 15 min | 13 | 82 | 5 |
| 28 | 15 min | 13 | 83 | 4 |

(suite)

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 29 | 15 min | 13 | 83 | 4 |
| 30 | 15 min | 14 | 83 | 4 |
| 31 | 15 min | 11 | 84 | 4 |
| 32 | 15 min | 9 | 88 | 3 |

En utilisant le même modèle cinétique de l'exemple précèdent et la valeur de $K=10^{2\pm1}$, la valeur de $k_1$[PLi], dans le modèle cinétique, est estimée à $10^{4\pm0.2}$. La Figure 2 compare les rendements simulés aux rendements mesurés en fonction du temps de réaction en réacteur discontinu parfaitement agité.

**3- Exemple de détermination du rapport de constantes cinétiques (K) de fonctionnalisation en configuration continue**

Dans une installation pilote de polymérisation continue, à la sortie du réacteur agité de polymérisation continu, supposé parfaitement agité, une quantité variable d'agent de fonctionnalisation est injectée afin de caractériser la section de fonctionnalisation continue. La section de fonctionnalisation est composée d'un mélangeur statique type kenics à 36 éléments de 4 L et d'un réacteur continu agité de volume 32,5 L, supposé parfaitement agité. Le temps de séjour minimal dans les réacteurs agités est de 20 minutes.

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère =11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée de ligne. À l'entrée du réacteur, 850 $\mu$mol de n-BuLi pour 100 g de monomères sont introduits.

Les différents débits sont calculés afin que le temps de séjour moyen dans le réacteur soit de 40 min. La température est maintenue à 90 °C. Le taux de conversion, mesuré sur un prélèvement réalisé en sortie de réacteur, est de 92,6 %.

En sortie de réacteur de polymérisation, du 3-(N,N-diméthylaminopropyl)triméthoxysilane en solution dans le méthylcyclohexane est ajouté à la solution de polymère vivant en différentes quantités (différents rapports molaires 3-(N,N-diméthylaminopropyl)triméthoxysilane / PLi) pour caractériser le procédé de fonctionnalisation. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et un réacteur agité continu de 32,5 L, supposé parfaitement agité selon l'homme de l'art, de 40 minutes de temps de séjour. Les polymères sont ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Les polymères ainsi traités sont séparés de leur solution par une opération de stripping à la vapeur d'eau, puis séchés sur un outil à cylindres à 100 °C.

Les sauts de viscosité inhérente (SV) mesurés sont présentés sur la Figure 3.

Le modèle cinétique de fonctionnalisation décrit ci-dessus est intégré, selon l'homme d'art, à un modèle de réacteur tubulaire (représentatif du mélangeur statique Kenics) suivi d'un réacteur parfaitement agité continu (représentatif du réacteur agité de fonctionnalisation) (bibliographie : Villermeaux, J; Génie de la réaction chimique; 1993) et permet de déterminer la répartition d'espèces PLi, P, PA, $P_2A$ et $P_3A$.

Pour faire le lien entre la répartition des espèces PLi, P, PA, $P_2A$ et $P_3A$ calculée par le modèle cinétique de fonctionnalisation et le rapport expérimental de viscosités inhérentes avant et après fonctionnalisation (SV), le SV est calculé de manière théorique par l'équation ci-dessous :

$$SV = \left( \frac{\sum_{i=1}^{n} w_{PiA} M_{w,P_iA}^{a} g_i'}{\bar{M}_{w,P}^{a}} \right)$$

Où,

$wP_iA$ est la fraction massique des espèces $P_iA$, PLi, P ;
Mw est la masse moléculaire moyenne en poids ;
a est le paramètre de l'équation MHS (Mark Houwink Sakurada) et égal à 0,75
$g_i$' est une correction pour les polymères étoilés, par exemple :

$$g_i' = \left(\frac{3i-2}{i^2}\right)^b$$

où,
b est égal à 0,58 (Livre : Structure and Rheology of Molten Polymers)

En supposant que le temps de séjour est assez long pour être considéré comme infini, on estime le rapport de constantes cinétiques K par minimisation des écarts de SV expérimental et calculé. La valeur de K est de $10^{1\pm1}$ comme représenté sur la Figure 3.

Le SV calculé est déterminé à partir de la répartition d'espèces calculée par le modèle cinétique intégré aux modèles de réacteurs tubulaire et parfaitement agité continu (Figure 4).

Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse. Dans les exemples, les résultats des propriétés dynamiques sont donnés en base 100. Plus ce nombre est élevé, plus l'hystérèse est élevée.

Abrasion

La mesure de perte de masse par abrasion est effectuée selon les indications de la norme NF ISO 4649, en utilisant un abrasimètre Zwick où l'éprouvette cylindrique est soumise à l'action d'une toile abrasive de grains P60 et fixée sur la surface d'un tambour tournant sous une pression de contact de 10 N et pour une course de 40 m. La valeur mesurée est un volume de perte de substance (en mm3) après usure par abrasion ; plus elle est faible et meilleure est la résistance à l'abrasion. Les résultats sont donnés en base 100 par rapport au témoin. Cette valeur est représentative dans le cas présent de la résistance à l'usure d'un pneu comprenant un tel matériau dans sa bande de roulement; plus la valeur est faible et meilleure est la résistance à l'abrasion du matériau et donc également meilleure est la résistance à l'usure d'un pneu comprenant ce matériau dans sa bande de roulement.

**Exemples de préparation d'élastomère**

Préparation du polymère A : SBR fonctionnel aminoalcoxysilane en milieu de chaîne - selon l'invention Tg -88°C

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé

de sa solution par une opération de stripping à la vapeur d'eau, puis séché sur un outil à cylindres à 100 °C. La viscosité inhérente "initiale" mesurée est de 1,98 dL.g-1. La masse molaire moyenne en nombre, Mn, déterminée par la technique de SEC, est de 90 000 g.mol-1 et l'indice de polymolécularité, Ip, est de 1,90.

En sortie du réacteur de polymérisation, 440 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,52 dL.g-1. Le saut de viscosité, défini comme le rapport de ladite viscosité "finale" sur ladite viscosité "initiale", est ici de 1,27.

La viscosité Mooney de ce polymère A est de 70.

La masse molaire moyenne en nombre, Mn, déterminée par la technique de SEC, est de 168 600 g.mol-1 et l'indice de polymolécularité, Ip, est de 1,68.

La microstructure de ce polymère est déterminée par la méthode NIR. Le taux de motifs 1,2 est de 12,7 % par rapport aux unités butadiène. Le taux massique de styrène est de 2,1 %.

La température de transition vitreuse de ce polymère est de - 88 °C.

La répartition des espèces après fonctionnalisation est donnée avec la méthode de modélisation décrite ci-dessus : 86% de chaînes fonctionnelles dont 77% sont fonctionnelles en milieu de chaîne et 14% de chaînes étoilées.

<u>Préparation du polymère B : BR fonctionnel aminoalcoxysilane en milieu de chaîne - selon l'invention Tg -91°C</u>

Dans un réacteur alimenté en continu agité de 32 L, supposé parfaitement agité selon l'homme de l'art, sont introduits en continu du méthylcyclohexane, du butadiène et du tétrahydrofurfuryl éthyle éther, selon les proportions suivantes : débit massique butadiène = 4,135 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,97 dL.g-1. La masse molaire moyenne en nombre, Mn, déterminée par la technique de SEC, est de 88 000 g.mol-1 et l'indice de polymolécularité, Ip, est de 1,90.

En sortie du réacteur de polymérisation, 442 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,54 dL.g-1. Le saut de viscosité, défini comme le rapport de ladite viscosité "finale" sur ladite viscosité "initiale", est ici de 1,27.

La viscosité Mooney de ce polymère B est de 69.

La masse molaire moyenne en nombre, Mn, déterminée par la technique de SEC, est de 170 000 g.mol-1 et l'indice de polymolécularité, Ip, est de 1,70.

La microstructure de ce polymère est déterminée par la méthode NIR. Le taux de motifs 1,2 est de 12,5 % par

rapport aux unités butadiène.

La température de transition vitreuse de ce polymère est de - 91 °C.

La répartition des espèces après fonctionnalisation est donnée avec la méthode de modélisation décrite ci-dessus : 86% de chaînes fonctionnelles dont 77% sont fonctionnelles en milieu de chaîne et 14% de chaînes étoilées.

Préparation du polymère C : SBR fonctionnel aminoalcoxysilane en milieu de chaîne - comparatif Tg -49°C

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,874 kg.h-1, débit massique styrène = 1,204 kg.h-1, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 870 μmol de n-BuLi pour 100 g de monomère sont introduits.

Les différents débits sont calculés afin que le temps de séjour moyen dans le réacteur soit de 40 min. La température est maintenue à 90 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,66 dL.g-1. La masse molaire moyenne en nombre, Mn, déterminée par la technique de SEC, est de 94 000 g.mol-1 et l'indice de polymolécularité, Ip, est de 1,90.

En sortie du réacteur de polymérisation, 452 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,1 dL.g-1. Le saut de viscosité, défini comme le rapport de ladite viscosité "finale" sur ladite viscosité "initiale", est ici de 1,30.

La viscosité Mooney de ce polymère C est de 67.

La masse molaire moyenne en nombre, Mn, déterminée par la technique de SEC, est de 141 200 g.mol-1 et l'indice de polymolécularité, Ip, est de 1,8.

La microstructure de ce polymère est déterminée par la méthode NIR. Le taux de motifs 1,2 est de 24,2 % par rapport aux unités butadiène. Le taux massique de styrène est de 26,4 %.

La température de transition vitreuse de ce polymère est de - 49 °C.

La répartition des espèces après fonctionnalisation est donnée avec la méthode de modélisation décrite ci-dessus : 86% de chaînes fonctionnelles dont 77% sont fonctionnelles en milieu de chaîne et 14% de chaînes étoilées.

Préparation du polymère D : SBR fonctionnel aminoalcoxysilane en milieu de chaîne - comparatif Tg -88°C

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,98 dL.g-1. La masse molaire moyenne en nombre, Mn, déterminée par la technique

de SEC, est de 90 000 g.mol-1 et l'indice de polymolécularité, Ip, est de 1,90.

En sortie du réacteur de polymérisation, 380 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,45).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,67 dL.g-1. Le saut de viscosité, défini comme le rapport de ladite viscosité "finale" sur ladite viscosité "initiale", est ici de 1,35.

La viscosité Mooney de ce polymère D est de 77.

La masse molaire moyenne en nombre, Mn, déterminée par la technique de SEC, est de 165 000 g.mol-1 et l'indice de polymolécularité, Ip, est de 1,70.

La microstructure de ce polymère est déterminée par la méthode NIR. Le taux de motifs 1,2 est de 12,7 % par rapport aux unités butadiène. Le taux massique de styrène est de 2,1 %.

La température de transition vitreuse de ce polymère est de - 88 °C.

La répartition des espèces après fonctionnalisation est donnée avec la méthode de modélisation décrite ci-dessus : 67% de chaînes fonctionnelles en milieu de chaîne et 33% de chaînes étoilées.

<u>Préparation du polymère E : SBR fonctionnel aminoalcoxysilane en milieu de chaîne - selon l'invention Tg -88°C</u>

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,98 dL.g-1. La masse molaire moyenne en nombre, Mn, déterminée par la technique de SEC, est de 90 000 g.mol-1 et l'indice de polymolécularité, Ip, est de 1,90.

En sortie du réacteur de polymérisation, 425 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,50).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,54 dL.g-1. Le saut de viscosité, défini comme le rapport de ladite viscosité "finale" sur ladite viscosité "initiale", est ici de 1,30.

La viscosité Mooney de ce polymère E est de 71.

La masse molaire moyenne en nombre, Mn, déterminée par la technique de SEC, est de 165 000 g.mol-1 et l'indice de polymolécularité, Ip, est de 1,70.

La microstructure de ce polymère est déterminée par la méthode NIR. Le taux de motifs 1,2 est de 12,7 % par rapport aux unités butadiène. Le taux massique de styrène est de 2,1 %.

La température de transition vitreuse de ce polymère est de - 88 °C.

La répartition des espèces après fonctionnalisation est donnée avec la méthode de modélisation décrite ci-dessus : 83% de chaînes fonctionnelles dont 76% sont fonctionnelles en milieu de chaîne et 18% de chaînes étoilées.

**Préparation du polymère F : SBR fonctionnel époxyde + alcoxysilane en milieu de chaîne - selon l'invention Tg -88°C**

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 4,013 kg.h-1, débit massique styrène = 0,122 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,95 dL.g-1. La masse molaire moyenne en nombre, Mn, déterminée par la technique de SEC, est de 88 000 g.mol-1 et l'indice de polymolécularité, Ip, est de 1,89.

En sortie du réacteur de polymérisation, 440 μmol pour 100 g de monomère de 3-(glycidyloxypropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,50 dL.g-1. Le saut de viscosité, défini comme le rapport de ladite viscosité "finale" sur ladite viscosité "initiale", est ici de 1,28.

La viscosité Mooney de ce polymère F est de 71.

La masse molaire moyenne en nombre, Mn, déterminée par la technique de SEC, est de 170 200 g.mol-1 et l'indice de polymolécularité, Ip, est de 1,66.

La microstructure de ce polymère est déterminée par la méthode NIR. Le taux de motifs 1,2 est de 12,7 % par rapport aux unités butadiène. Le taux massique de styrène est de 2,1 %.

La température de transition vitreuse de ce polymère est de - 88 °C.

La répartition des espèces après fonctionnalisation est donnée avec la méthode de modélisation décrite ci-dessus : 83% de chaînes fonctionnelles dont 79% sont fonctionnelles en milieu de chaîne et 17% de chaînes étoilées.

**Préparation du polymère** G : **BR fonctionnel époxyde** + **alcoxysilane en milieu de chaîne** - **selon l'invention Tg -91°C**

Dans un réacteur alimenté en continu agité de 32 L, supposé parfaitement agité selon l'homme de l'art, sont introduits en continu du méthylcyclohexane, du butadiène et du tétrahydrofurfuryl éthyle éther, selon les proportions suivantes : débit massique butadiène = 4,135 kg.h-1, concentration massique en monomère = 9,75 wt.%, 15 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 850 μmol de n-BuLi pour 100 g de monomère sont introduits.

Les différents débits sont calculés afin que le temps de séjour moyen dans le réacteur soit de 35 min. La température est maintenue à 95 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,99 dL.g-1. La masse molaire moyenne en nombre, Mn, déterminée par la technique

de SEC, est de 90 000 g.mol-1 et l'indice de polymolécularité, Ip, est de 1,91.

En sortie du réacteur de polymérisation, 440 μmol pour 100 g de monomère de 3-(glycidyloxypropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,55 dL.g-1. Le saut de viscosité, défini comme le rapport de ladite viscosité "finale" sur ladite viscosité "initiale", est ici de 1,28.

La viscosité Mooney de ce polymère G est de 70.

La masse molaire moyenne en nombre, Mn, déterminée par la technique de SEC, est de 173 000 g.mol-1 et l'indice de polymolécularité, Ip, est de 1,71.

La microstructure de ce polymère est déterminée par la méthode NIR. Le taux de motifs 1,2 est de 12,5 % par rapport aux unités butadiène.

La température de transition vitreuse de ce polymère est de - 91 °C.

La répartition des espèces après fonctionnalisation est donnée avec la méthode de modélisation décrite ci-dessus : 85% de chaînes fonctionnelles dont 76% sont fonctionnelles en milieu de chaîne et 15% de chaînes étoilées.

**Préparation du polymère H : SBR fonctionnel époxyde + alcoxysilane en milieu de chaîne - comparatif Tg -48°C**

Dans un réacteur alimenté en continu agité de 32 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,874 kg.h-1, débit massique styrène = 1,204 kg.h-1, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 870 μmol de n-BuLi pour 100 g de monomère sont introduits.

Les différents débits sont calculés afin que le temps de séjour moyen dans le réacteur soit de 40 min. La température est maintenue à 90 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,65 dL.g-1. La masse molaire moyenne en nombre, Mn, déterminée par la technique de SEC, est de 92 000 g.mol-1 et l'indice de polymolécularité, Ip, est de 1,90.

En sortie du réacteur de polymérisation, 450 μmol pour 100 g de monomère de 3-(glycidyloxypropyl)triméthoxysilane (Agent de couplage et d'étoilage AdC) en solution dans le méthylcyclohexane sont ajoutés à la solution de polymère vivant (AdC/Li = 0,52).

Cette solution est mélangée pendant 30 secondes dans un système de type piston constitué d'un mélangeur statique constitué de 36 éléments de mélangeage de type Kenics KMR puis d'un tube vide. La solution est ensuite mélangée dans un réacteur supposé parfaitement agité pendant 35 minutes, la température dans ces réacteurs (système de type piston + mélangeur supposé parfaitement agité) étant de 95°C.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,14 dL.g-1. Le saut de viscosité, défini comme le rapport de ladite viscosité "finale" sur ladite viscosité "initiale", est ici de 1,30.

La viscosité Mooney de ce polymère H est de 68.

La masse molaire moyenne en nombre, Mn, déterminée par la technique de SEC, est de 143 000 g.mol-1 et l'indice de polymolécularité, Ip, est de 1,75.

La microstructure de ce polymère est déterminée par la méthode NIR. Le taux de motifs 1,2 est de 24,0 % par rapport aux unités butadiène. Le taux massique de styrène est de 27,0 %.

La température de transition vitreuse de ce polymère est de - 48 °C.

La répartition des espèces après fonctionnalisation est donnée avec la méthode de modélisation décrite ci-dessus : 85% de chaînes fonctionnelles dont 77% sont fonctionnelles en milieu de chaîne et 15% de chaînes étoilées.

**Préparation du polymère I : BR fonctionnel mercaptoalcoxysilane en milieu de chaîne - selon l'invention Tg - 91°C**

Dans un réacteur de 90 litres, maintenu sous une pression d'azote d'environ 2 bars, contenant 43,9 kg de méthylcyclohexane, sont injectés 7,5 kg de butadiène ainsi que 313 mL d'une solution de tétrahydrofurane à 0,349 $mol.L^{-1}$ dans le méthylcyclohexane. Après neutralisation des impuretés dans la solution à polymériser par addition de n-butyllithium, sont ajoutés 1043 mL de n-butyllithium à 0,063 $mol.L^{-1}$ dans le méthylcyclohexane. La polymérisation est conduite à 50 °C.

Après 95 minutes, le taux de conversion des monomères atteint 89 %. Ce taux est déterminé par pesée d'un extrait séché à 140 °C, sous la pression réduite de 200 mmHg. 528 mL d'une solution de 3,3-méthoxy-8,8,9,9-tétraméthyl-2-oxa-7-thia-3,8-disiladécane à 0,020 $mol.L^{-1}$ dans le méthylcyclohexane sont ajoutés à la solution de polymère vivant. Après 30 minutes de réaction à 50 °C, 528 mL d'une solution de 3,3-méthoxy-8,8,9,9-tétraméthyl-2-oxa-7-thia-3,8-disiladécane à 0,030 $mol.L^{-1}$ dans le méthylcyclohexane sont ensuite ajoutés à cette solution de polymère. Après 30 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur un outil à cylindres à 100 °C.

La microstructure de ce copolymère est déterminée par la méthode NIR : le taux massique de motifs 1,4-trans est de 49 %, celui de motifs 1,4-cis est de 37 % et celui de motifs 1,2 est de 14 %.

La température de transition vitreuse de ce copolymère est de - 91°C.

La viscosité Mooney du polymère E est de 42.

La répartition des espèces après fonctionnalisation est donnée par la méthode de SEC haute résolution : 70 % de chaînes fonctionnelles en milieu de chaîne, 16% de chaînes non-fonctionnelles et 14 % de chaînes étoilées.

**Préparation du polymère J : SBR fonctionnel mercaptoalcoxysilane en milieu de chaîne - comparatif Tg - 48°C**

Dans un réacteur de 90 litres, maintenu sous une pression d'azote d'environ 2 bars, contenant 44,3 kg de méthylcyclohexane, sont injectés 3,0 kg de styrène et 4,7 kg de butadiène ainsi que 660 mL d'une solution de tétrahydrofurane à 0,59 $mol.L^{-1}$ dans le méthylcyclohexane. Après neutralisation des impuretés dans la solution à polymériser par addition de n-butyllithium, sont ajoutés 825 mL de n-butyllithium à 0,063 $mol.L^{-1}$ dans le méthylcyclohexane. La polymérisation est conduite à 50 °C.

Après 45 minutes, le taux de conversion des monomères atteint 69%. Ce taux est déterminé par pesée d'un extrait séché à 140 °C, sous la pression réduite de 200 mmHg. 412 mL d'une solution de 3,3-méthoxy-8,8,9,9-tétraméthyl-2-oxa-7-thia-3,8-disiladécane à 0,020 $mol.L^{-1}$ dans le méthylcyclohexane sont ajoutés à la solution de polymère vivant. Après 30 minutes de réaction à 50°C, 412 mL d'une solution de 3,3-méthoxy-8,8,9,9-tétraméthyl-2-oxa-7-thia-3,8-disiladécane à 0.030 $mol.L^{-1}$ dans le méthylcyclohexane sont ensuite ajoutés à cette solution de polymère. Après 30 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur un outil à cylindres à 100 °C.

La microstructure de ce copolymère est déterminée par la méthode NIR : le taux massique de motifs 1,4-trans est de 48 %, celui de motifs 1,4-cis est de 28 % et celui de motifs 1,2 est de 24 %, chacun de ces trois taux se rapportant aux unités butadiène. Le taux massique de styrène est de 27,5%.

La température de transition vitreuse de ce copolymère est de - 48°C.

La viscosité Mooney du polymère J est de 66.

La répartition des espèces après fonctionnalisation est donnée par la méthode de SEC haute résolution : 70 % de chaînes fonctionnelles en milieu de chaîne, 16% de chaîne non fonctionnelles et 14 % de chaînes étoilées.

**Préparation du polymère K : BR fonctionnel mercaptoalcoxysilane en milieu de chaîne - comparatif Tg - 91°C**

Dans un réacteur de 90 litres, maintenu sous une pression d'azote d'environ 2 bars, contenant 43,9 kg de méthylcyclohexane, sont injectés 7,5 kg de butadiène ainsi que 313 mL d'une solution de tétrahydrofurane à 0,349 $mol.L^{-1}$ dans le méthylcyclohexane. Après neutralisation des impuretés dans la solution à polymériser par addition de n-butyllithium, sont ajoutés 1019 mL de n-butyllithium à 0,063 $mol.L^{-1}$ dans le méthylcyclohexane. La polymérisation est conduite à 50 °C.

Après 95 minutes, le taux de conversion des monomères atteint 88 %. Ce taux est déterminé par pesée d'un

extrait séché à 140 °C, sous la pression réduite de 200 mmHg. 516 mL d'une solution de $MeSiCl_3$ à 0,015 $mol.L^{-1}$ dans le méthylcyclohexane sont ajoutés à la solution de polymère vivant. Après 15 minutes de réaction à 50 °C, 590 mL d'une solution de 3,3-méthoxy-8,8,9,9-tétraméthyl-2-oxa-7-thia-3,8-disiladécane à 0,035 $mol.L^{-1}$ dans le méthylcyclohexane sont ensuite ajoutés à cette solution de polymère. Après 30 minutes de réaction à 50 °C, la solution est antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur un outil à cylindres à 100 °C.

La microstructure de ce copolymère est déterminée par la méthode NIR : le taux massique de motifs 1,4-trans est de 49 %, celui de motifs 1,4-cis est de 36 % et celui de motifs 1,2 est de 15 %.

La température de transition vitreuse de ce copolymère est de - 90°C.

La viscosité Mooney du polymère K est de 61.

La répartition des espèces après fonctionnalisation est donnée par la méthode de SEC haute résolution : 51 % de chaînes fonctionnelles en milieu de chaîne, 15% de chaînes non-fonctionnelles et 34 % de chaînes étoilées.

**Compositions de** caoutchouc :

Les élastomères A à E ont été utilisés pour la préparation de compositions de caoutchouc de type bande de roulement, comprenant chacune de la silice à titre de charge renforçante.

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 cm3, qui est rempli à 70% et dont la température initiale est d'environ 90°C, l'élastomère, les deux tiers de la silice, le noir, l'agent de couplage et l'huile, puis, environ une minute plus tard, le reste de la charge renforçante, la résine, l'antioxydant, l'acide stéarique et la cire anti-ozone, puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Chacune des compositions présente la formulation suivante (exprimée en pce : parties pour cent parties d'élastomère) :

| Compositions / Ingrédients | A conforme | B conforme | C non-conforme | D non-conforme | E conforme | F conforme | G conforme | H non-conforme |
|---|---|---|---|---|---|---|---|---|
| Polymère A | 100 | | | | | | | |
| Polymère B | | 100 | | | | | | |
| Polymère C | | | 100 | | | | | |
| Polymère D | | | | 100 | | | | |
| Polymère E | | | | | 100 | | | |
| Polymère F | | | | | | 100 | | |
| Polymère G | | | | | | | 100 | |
| Polymère H | | | | | | | | 100 |
| Silice | 120 | 120 | 120 | 120 | 120 | 120 | 120 | 120 |
| Noir de carbone | 4 | 4 | 4 | 4 | 4 | 4 | 4 | 4 |
| Huile | 12 | 12 | 12 | 12 | 12 | 12 | 12 | 12 |
| Résine | 73 | 73 | 73 | 73 | 73 | 73 | 73 | 73 |
| Agent de couplage | 9.6 | 9.6 | 9.6 | 9.6 | 9.6 | 9.6 | 9.6 | 9.6 |
| Acide stéarique | 3 | 3 | 3 | 3 | 3 | 3 | 3 | 3 |
| Oxyde de Zinc | 1.5 | 1.5 | 1.5 | 1.5 | 1.5 | 1.5 | 1.5 | 1.5 |
| Soufre soluble | 1.5 | 1.5 | 1.5 | 1.5 | 1.5 | 1.5 | 1.5 | 1.5 |
| Accélérateur | 1.5 | 1.5 | 1.5 | 1.5 | 1.5 | 1.5 | 1.5 | 1.5 |
| Antioxydant | 3 | 3 | 3 | 3 | 3 | 3 | 3 | 3 |

| Ingrédients \ Compositions | I conforme | J non-conforme | K non-conforme |
|---|---|---|---|
| Polymère I | 100 | | |
| Polymère J | | 100 | |
| Polymère K | | | 100 |
| Silice | 120 | 120 | 120 |
| Noir de carbone | 4 | 4 | 4 |
| Huile | 12 | 12 | 12 |
| Résine | 73 | 73 | 73 |
| Agent de couplage | 9.6 | 9.6 | 9.6 |
| Acide stéarique | 3 | 3 | 3 |
| Oxyde de Zinc | 1.5 | 1.5 | 1.5 |
| Soufre soluble | 1.5 | 1.5 | 1.5 |
| Accélérateur | 1.5 | 1.5 | 1.5 |
| Antioxydant | 3 | 3 | 3 |

*Silice Z1165 MP de Solvay, surface BET de environ 160$m^2$/g*
*Noir de carbone grade ASTM N234 de la socité Cabot Corporation*
*Huile lubrirob Tod 1880 de la société Novance*
*Résine ECR-373 de la société ExxonMobil*
*Agent de couplage TESPT, Si69 de la société Degussa*
*Accélérateur Santocure CBS de la société Flexsys*
*Antioxydant 6-paraphenylènediamine (6PPD) de la société Flexsys*

Résultats:

Les résultats reportés dans les tableaux 1 à 3 ci-dessous montrent que l'utilisation du polymère selon l'invention permet une amélioration significative de l'usure, et une amélioration de la résistance au roulement, en atteignant un bon niveau de résistance au fluage du polymère.

Tableau 1 :

| Compositions | A | B | C non conforme | D non conforme | E |
|---|---|---|---|---|---|
| Cold Flow | 57 | 66 | 100 | 22 | 30 |
| Hystérèse tan δmax 23°C | 75 | 71 | 100 | 78 | 75 |
| Perte par abrasion | 65 | 64 | 100 | 65 | 65 |
| Normés en base 100 par rapport à l'échantillon C | | | | | |

Tableau 2 :

| Compositions | F | G | H non conforme |
|---|---|---|---|
| Cold Flow | 95 | 97 | 100 |
| Hystérèse tan $\delta$max 23°C | 75 | 71 | 100 |
| Perte par abrasion | 65 | 64 | 100 |
| Normés en base 100 par rapport à l'échantillon H | | | |

Tableau 3 :

| Compositions | I | J non conforme | K non conforme |
|---|---|---|---|
| Cold Flow | 100 | 100 | 37 |
| Hystérèse tan $\delta$max 23°C | 75 | 100 | 78 |
| Perte par abrasion | 64 | 100 | 64 |
| Normés en base 100 par rapport à l'échantillon J | | | |

**Revendications**

**1.** Composition de caoutchouc renforcée à base d'au moins une charge renforçante, d'une résine plastifiante et d'une matrice élastomère comprenant au moins un élastomère diénique modifié composé de:

a) au moins 70% en poids, par rapport au poids total de l'élastomère diénique modifié, d'un élastomère diénique linéaire fonctionnalisé majoritairement en milieu de chaîne par un groupe alcoxysilane, éventuellement partiellement ou totalement hydrolysé en silanol, le groupe alcoxysilane étant porteur ou non d'une autre fonction susceptible d'interagir avec une charge renforçante, l'atome de silicium du groupe alcoxysilane étant situé dans la chaîne principale de l'élastomère diénique,
b) plus de 0 et jusqu'à 30% en poids, par rapport au poids total de l'élastomère diénique modifié, d'un élastomère diénique étoilé,

la viscosité Mooney dudit élastomère diénique modifié variant de 50 à 80, et sa température de transition vitreuse (Tg) variant de - 100°C à -80°C, de préférence de -95°C à -80°C.

**2.** Composition selon la revendication 1, **caractérisée en ce que** l'élastomère a), l'élastomère diénique linéaire fonctionnalisé majoritairement en milieu de chaîne par un groupe alcoxysilane, est constitué d'au moins 80% en poids par rapport au poids total de l'élastomère a), de chaînes linéaires fonctionnalisées en milieu de chaîne.

**3.** Composition selon l'une quelconque des revendications précédentes, **caractérisée en ce que** l'élastomère diénique étoilé b) est un élastomère étoilé à base d'étain ou de silicium.

**4.** Composition selon la revendication 3, **caractérisée en ce que** l'élastomère diénique étoilé b) est un élastomère étoilé à trois branches par un atome de silicium porteur ou non d'une fonction susceptible d'interagir avec une charge renforçante, l'atome de silicium étant substitué par les trois branches de l'élastomère diénique.

**5.** Composition selon l'une quelconque des revendications précédentes, **caractérisée en ce que** la fonction susceptible d'interagir avec une charge renforçante est une fonction choisie parmi les amines primaires, secondaires ou tertiaires, cycliques ou non, les isocyanates, les imines, les cyano, les thiols, les carboxylates, les époxydes, les phosphines primaires, secondaires ou tertiaires.

**6.** Composition selon l'une quelconque des revendications précédentes, **caractérisée en ce que** l'autre fonction susceptible d'interagir avec une charge renforçante et l'atome de silicium lié à l'élastomère sont reliés entre eux par un groupement espaceur défini comme étant un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$, ledit grou-

pement espaceur contenant éventuellement un ou plusieurs radicaux aromatiques et/ou un ou plusieurs hétéroatomes.

**7.** Composition selon l'une quelconque des revendications précédentes, **caractérisée en ce que** l'élastomère diénique modifié est un homopolymère de butadiène ayant un ratio molaire en liaisons cis-1,4 /liaisons trans-1,4 allant de 1 à 0,65 et présentant un taux d'unité vinylique par rapport à la portion diénique allant de 8 à 15% en poids, de préférence allant de 10 à 15% en poids.

**8.** Composition selon l'une quelconque des revendications 1 à 6, **caractérisée en ce que** l'élastomère diénique modifié est un copolymère de butadiène et d'un monomère vinylaromatique, de préférence le styrène, présentant un taux d'unité vinylaromatique compris entre 0 et 5% en poids et particulièrement allant de 1% à 4% en poids par rapport au poids total de l'élastomère diénique, ainsi qu'un taux d'unité vinylique par rapport à la portion diénique allant de 8 à 15% en poids, de préférence allant de 10 à 15% en poids.

**9.** Composition selon l'une quelconque des revendications précédentes, **caractérisée en ce que** les élastomères diéniques a) et b) ont avant fonctionnalisation et étoilage la même microstructure et la même macrostructure.

**10.** Composition selon l'une quelconque des revendications précédentes, **caractérisée** en ce l'élastomère diénique modifié est obtenu par un procédé qui comprend les étapes suivantes :

- polymérisation anionique d'au moins un monomère diène conjugué en présence d'un initiateur de polymérisation pour former un élastomère diénique vivant ;
- modification de l'élastomère par réaction avec un agent de fonctionnalisation avec un rapport molaire de l'agent de fonctionnalisation à l'initiateur de polymérisation variant de 0,40 à 0,75, l'agent de fonctionnalisation répondant à la formule 1 suivante:

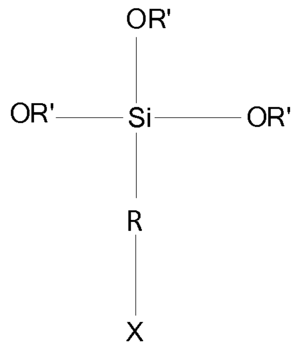

Formule 1

dans laquelle,

o R est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{18}$, plus préférentiellement un radical hydrocarboné divalent linéaire, plus préférentiellement encore le radical hydrocarboné linéaire en $C_2$ ou $C_3$.
o X est un atome d'hydrogène ou une fonction susceptible d'interagir avec une charge renforçante,
o les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

**11.** Composition selon l'une quelconque des revendications précédentes **caractérisée** en ce l'élastomère diénique modifié présente au moins une, au moins deux, au moins trois, au moins quatre, au moins cinq quelconque des caractéristiques suivantes et de préférence toutes :

- l'élastomère diénique étoilé b) est un élastomère étoilé à trois branches par un atome de silicium porteur d'une autre fonction susceptible d'interagir avec une charge renforçante, l'atome de silicium par les trois branches

de l'élastomère diénique,
- l'autre fonction susceptible d'interagir avec une charge renforçante est une amine tertiaire, plus particulièrement un groupement diéthylamino- ou diméthylamino-,
- le groupement espaceur est un radical hydrocarboné linéaire en $C_1$-$C_{18}$, plus préférentiellement encore le radical hydrocarboné linéaire en $C_2$ ou $C_3$,
- la fonction comprenant l'atome de silicium est un méthoxysilane ou éthoxysilane, éventuellement partiellement ou totalement hydrolysé en silanol,
- l'élastomère diénique est un polymère de butadiène, plus particulièrement un homopolymère de butadiène ou un copolymère butadiène-styrène,
- l'élastomère diénique comprend au moins 75 en poids de l'élastomère diénique linéaire fonctionnalisé majoritairement en milieu de chaîne a) et au plus 25% en poids de l'élastomère diénique étoilé b), par rapport au poids total de l'élastomère diénique modifié

**12.** Composition selon l'une quelconque des revendications précédentes, **caractérisée en ce que** la ou les charges renforçantes comprennent plus de 50% en poids de la ou des charges renforçantes, de charge inorganique renforçante.

**13.** Composition selon l'une quelconque des revendications précédentes, **caractérisée en ce que** la ou les résines plastifiantes présentent au moins une quelconque des caractéristiques suivantes, de préférence toutes :

- une Tg supérieure à 20°C, notamment supérieure à 30°C ;
- une masse moléculaire moyenne en nombre (Mn) supérieure à 300g/mol, notamment de 400 à 1500 g/mol ;
- un indice de polymolécularité (Ip) inférieur à 3, notamment inférieur à 2 (rappel : Ip = Mw/Mn avec Mw masse moléculaire moyenne en poids).

**14.** Article semi-fini en caoutchouc pour pneumatique, **caractérisé en ce qu'**il comprend une composition de caoutchouc réticulable ou réticulée selon l'une quelconque des revendications 1 à 13.

**15.** Pneumatique, **caractérisé en ce qu'**il comporte un article semi-fini tel que défini dans la revendication 14.

**Patentansprüche**

**1.** Verstärkte Kautschukzusammensetzungen auf Basis mindestens eines verstärkenden Füllstoffs, eines weichmachenden Harzes und einer Elastomermatrix, die mindestens ein modifiziertes Dienelastomer umfasst, welches aus

a) mindestens 70 Gew.-%, bezogen auf das Gesamtgewicht des modifizierten Dienelastomers, eines linearen Dienelastomers, das hauptsächlich in der Kettenmitte durch eine Alkoxysilangruppe, die gegebenenfalls teilweise oder vollständig zu Silanol hydrolysiert ist, funktionalisiert ist, wobei die Alkoxysilangruppe gegebenenfalls eine weitere Funktion trägt, die zur Wechselwirkung mit einem verstärkenden Füllstoff befähigt ist, wobei sich das Siliciumatom der Alkoxysilangruppe in der Hauptkette des Dienelastomers befindet,
b) mehr als 0 und bis zu 30 Gew.-%, bezogen auf das Gesamtgewicht des modifizierten Dienelastomers, eines sternverzweigten Dienelastomers besteht,

wobei die Mooney-Viskosität des modifizierten Dienelastomers von 50 bis 80 variiert und seine Glasübergangstemperatur (Tg) von -100 °C bis -80°C, vorzugsweise von -95 °C bis -80 °C, variiert.

**2.** Zusammensetzung nach Anspruch 1, **dadurch gekennzeichnet, dass** das Elastomer a), das lineare Dienelastomer, das hauptsächlich in der Kettenmitte durch eine Alkoxysilangruppe substituiert ist, aus mindestens 80 Gew.-%, bezogen auf das Gesamtgewicht des Elastomers a), aus linearen Ketten, die in der Kettenmitte funktionalisiert sind, besteht.

**3.** Zusammensetzung nach einem der vorhergehenden Ansprüche, **dadurch gekennzeichnet, dass** es sich bei dem verzweigten Dienelastomer b) um ein sternverzweigtes Elastomer auf Basis von Zinn oder Silicium handelt.

**4.** Zusammensetzung nach Anspruch 3, **dadurch gekennzeichnet, dass** es sich bei dem sternverzweigten Dienelastomer b) um ein über ein Siliciumatom, das gegebenenfalls eine Funktion, die zur Wechselwirkung mit einem verstärkenden Füllstoff befähigt ist, trägt, sternverzweigtes Elastomer mit drei Armen handelt, wobei das Siliciumatom durch die drei Arme des Dienelastomers substituiert ist.

5. Zusammensetzung nach einem der vorhergehenden Ansprüche, **dadurch gekennzeichnet, dass** es sich bei der Funktion, die zur Wechselwirkung mit einem verstärkenden Füllstoff befähigt ist, um eine Funktion handelt, die aus cyclischen oder acyclischen primären, sekundären oder tertiären Aminen, Isocyanaten, Iminen, Cyano, Thiolen, Carboxylaten, Epoxiden und primären, sekundären oder tertiären Phosphinen ausgewählt ist.

6. Zusammensetzung nach einem der vorhergehenden Ansprüche, **dadurch gekennzeichnet, dass** die weitere Funktion, die zur Wechselwirkung mit einem verstärkenden Füllstoff befähigt ist, und das an das Elastomer gebundene Siliciumatom über eine Spacergruppe, die als ein cyclischer oder acyclischer, gesättigter oder ungesättigter, linearer oder verzweigter zweiwertiger aliphatischer $C_1$-$C_{18}$-Kohlenwasserstoffrest oder ein zweiwertiger aromatischer $C_6$-$C_{18}$-Kohlenwasserstoffrest definiert ist, miteinander verbunden sind, wobei die Spacergruppe gegebenenfalls einen oder mehrere aromatische Reste und/oder ein oder mehrere Heteroatome enthält.

7. Zusammensetzung nach einem der vorhergehenden Ansprüche, **dadurch gekennzeichnet, dass** es sich bei dem modifizierten Dienelastomer um ein Butadien-Homopolymer mit einem Molverhältnis von cis-1,4-Bindungen zu trans-1,4-Bindungen im Bereich von 1 bis 0,65 und einem Gehalt an Vinyleinheiten, bezogen auf den Dienteil, im Bereich von 8 bis 15 Gew.-%, vorzugsweise im Bereich von 10 bis 15 Gew.-%, handelt.

8. Zusammensetzung nach einem der Ansprüche 1 bis 6, **dadurch gekennzeichnet, dass** es sich bei dem modifizierten Dienelastomer um ein Copolymer von Butadien und einem vinylaromatischen Monomer, vorzugsweise Styrol, mit einem Gehalt an vinylaromatischen Einheiten zwischen 0 und 5 Gew.-% und insbesondere im Bereich von 1 bis 4 Gew.-%, bezogen auf das Gesamtgewicht des Dienelastomers, sowie einem Gehalt an Vinyleinheiten, bezogen auf den Dienteil, im Bereich von 8 bis 15 Gew.-%, vorzugsweise im Bereich von 10 bis 15 Gew.-%, handelt.

9. Zusammensetzung nach einem der vorhergehenden Ansprüche, **dadurch gekennzeichnet, dass** die Dienelastomere a) und b) vor der Funktionalisierung und Sternverzweigung die gleiche Mikrostruktur und die gleiche Makrostruktur aufweisen.

10. Zusammensetzung nach einem der vorhergehenden Ansprüche, **dadurch gekennzeichnet, dass** das modifizierte Dienelastomer durch ein Verfahren erhalten wird, das folgende Schritte umfasst:

- anionische Polymerisation von mindestens einem konjugierten Dienmonomer in Gegenwart eines Polymerisationsinitiators zur Bildung eines lebenden Dienelastomers;
- Modifizierung des Elastomers durch Umsetzung mit einem Funktionalisierungsmittel mit einem Molverhältnis von Funktionalisierungsmittel zu Polymerisationsinitiator im Bereich von 0,40 bis 0,75, wobei das Funktionalisierungsmittel der folgenden Formel 1 entspricht:

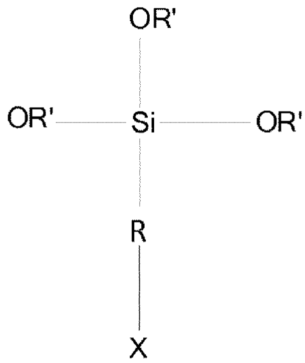

Formel 1

in der

- R für einen cyclischen oder acyclischen, gesättigten oder ungesättigten zweiwertigen aliphatischen $C_1$-$C_{18}$-Kohlenwasserstoffrest oder aromatischen $C_6$-$C_{18}$-Kohlenwasserstoffrest, bevorzugt einen linearen oder verzweigten zweiwertigen aliphatischen $C_1$-$C_{18}$-Kohlenwasserstoffrest, weiter bevorzugt einen linearen zweiwertigen und noch, weiter bevorzugt den linearen $C_2$- oder $C_3$-Kohlenwasserstoffrest steht,
- X für ein Wasserstoffatom oder eine Funktion, die zur Wechselwirkung mit einem verstärkenden Füllstoff

befähigt ist, steht,
o die Reste R’, die substituiert oder unsubstituiert und gleich oder verschieden sind, für eine $C_1$-$C_{10}$- oder sogar $C_1$-$C_8$-Alkylgruppe, vorzugsweise eine $C_1$-$C_4$-Alkylgruppe, weiter bevorzugt Methyl und Ethyl, stehen.

**11.** Zusammensetzung nach einem der vorhergehenden Ansprüche, **dadurch gekennzeichnet, dass** das modifizierte Dienelastomer mindestens eine, mindestens zwei, mindestens drei, mindestens vier oder mindestens fünf der folgenden Merkmale und vorzugsweise alle aufweist:

- bei dem sternverzweigten Dienelastomer b) handelt es sich um ein über ein Siliciumatom, das gegebenenfalls eine Funktion, die zur Wechselwirkung mit einem verstärkenden Füllstoff befähigt ist, trägt, sternverzweigtes Elastomer mit drei Armen, wobei das Siliciumatom durch die drei Arme des Dienelastomers substituiert ist,
- bei der weiteren Funktion, die zur Wechselwirkung mit einem verstärkenden Füllstoff befähigt ist, handelt es sich um ein tertiäres Amin, insbesondere eine Diethylamino- oder Dimethylaminogruppe,
- bei der Spacergruppe handelt es sich um einen linearen $C_1$-$C_{18}$-Kohlenwasserstoffrest, noch weiter bevorzugt den linearen $C_2$- oder $C_3$-Kohlenwasserstoffrest,
- bei der Funktion, die das Siliciumatom umfasst, handelt es sich um ein Methoxysilan oder Ethoxysilan, das gegebenenfalls teilweise oder vollständig zu Silanol hydrolysiert ist,
- bei dem Dienelastomer handelt es sich um ein Butadienpolymer, spezieller ein Butadien-Homopolymer oder ein Butadien-Styrol-Copolymer,
- das Dienelastomer umfasst mindestens 75 Gew.-% des hauptsächlich in der Kettenmitte funktionalisierten linearen Dienelastomers a) und höchstens 25 Gew.-% des sternverzweigten Dienelastomers b), bezogen auf das Gesamtgewicht des modifizierten Dienelastomers.

**12.** Zusammensetzung nach einem der vorhergehenden Ansprüche, **dadurch gekennzeichnet, dass** der verstärkende Füllstoff bzw. die verstärkenden Füllstoffeh mehr als 50 Gew.-%, bezogen auf den verstärkenden Füllstoff bzw. die verstärkenden Füllstoffe, verstärkenden anorganischen Füllstoff umfasst bzw. umfassen.

**13.** Zusammensetzung nach einem der vorhergehenden Ansprüche, **dadurch gekennzeichnet, dass** die weichmachenden Harze mindestens eines der folgenden Merkmale und vorzugsweise alle aufweisen:

- eine Tg von mehr als 20 °C, insbesondere mehr als 30 °C;
- eine zahlenmittlere Molmasse (Mn) von mehr als 300 g/mol, insbesondere 400 bis 1500 g/mol;
- einen Polymolekularitätsindex (Ip) von weniger als 3, insbesondere weniger als 2 (Erinnerung: Ip = Mw/Mn, wobei Mw die gewichtsmittlere Molmasse ist).

**14.** Kautschuk-Halbzeug für Reifen, **dadurch gekennzeichnet, dass** es eine vernetzbare oder vernetzte Kautschukzusammensetzung nach einem der Ansprüche 1 bis 13 umfasst.

**15.** Reifen, **dadurch gekennzeichnet, dass** er ein Halbzeug gemäß Anspruch 14 umfasst.

## Claims

**1.** Reinforced rubber composition based on at least one reinforcing filler, on a plasticizing resin and on an elastomer matrix comprising at least one modified diene elastomer composed of:

a) at least 70% by weight, relative to the total weight of the modified diene elastomer, of a linear diene elastomer functionalized predominantly in the middle of the chain by an alkoxysilane group, optionally partially or completely hydrolysed to give silanol, the alkoxysilane group bearing or not another function capable of interacting with a reinforcing filler, the silicon atom of the alkoxysilane group being located in the main chain of the diene elastomer,
b) more than 0 and up to 30% by weight, relative to the total weight of the modified diene elastomer, of a star-branched diene elastomer,

the Mooney viscosity of said modified diene elastomer ranging from 50 to 80, and its glass transition temperature (Tg) ranging from -100°C to -80°C, preferably from -95°C to -80°C.

**2.** Composition according to Claim 1, **characterized in that** the elastomer a), the linear diene elastomer functionalized predominantly in the middle of the chain by an alkoxysilane group, consists of at least 80% by weight, relative to

the total weight of the elastomer a), of linear chains functionalized in the middle of the chain.

3. Composition according to any one of the preceding claims, **characterized in that** the star-branched diene elastomer b) is a tin-based or silicon-based star-branched elastomer.

4. Composition according to Claim 3, **characterized in that** the star-branched diene elastomer b) is a three-branched star-branched elastomer branched by a silicon atom bearing, or not bearing, a function capable of interacting with a reinforcing filler, the silicon atom being substituted by the three branches of the diene elastomer.

5. Composition according to any one of the preceding claims, **characterized in that** the function capable of interacting with a reinforcing filler is a function chosen from cyclic or non-cyclic, primary, secondary or tertiary amines, isocyanates, imines, cyanos, thiols, carboxylates, epoxides or primary, secondary or tertiary phosphines.

6. Composition according to any one of the preceding claims, **characterized in that** the other function capable of interacting with a reinforcing filler and the silicon atom bonded to the elastomer are connected to one another via a spacer group defined as being a saturated or unsaturated, cyclic or non-cyclic, linear or branched, divalent $C_1$-$C_{18}$ aliphatic hydrocarbon-based radical or a divalent $C_6$-$C_{18}$ aromatic hydrocarbon-based radical, said spacer group optionally comprising one or more aromatic radicals and/or one or more heteroatoms.

7. Composition according to any one of the preceding claims, **characterized in that** the modified diene elastomer is a butadiene homopolymer having a molar ratio of cis-1,4-bonds / trans-1,4- bonds ranging from 1 to 0.65 and having a content of vinyl units relative to the diene portion ranging from 8 to 15% by weight, preferably ranging from 10 to 15% by weight.

8. Composition according to any one of Claims 1 to 6, **characterized in that** the modified diene elastomer is a copolymer of butadiene and of a vinylaromatic monomer, preferably styrene, having a content of vinylaromatic units of between 0 and 5% by weight and particularly ranging from 1% to 4% by weight relative to the total weight of the diene elastomer, and also a content of vinyl units relative to the diene portion ranging from 8 to 15% by weight, preferably ranging from 10 to 15% by weight.

9. Composition according to any one of the preceding claims, **characterized in that** the diene elastomers a) and b) have, before functionalization and star-branching, the same microstructure and the same macrostructure.

10. Composition according to any one of the preceding claims, **characterized in that** the modified diene elastomer is obtained by a process which comprises the following steps:

   - anionic polymerization of at least one conjugated diene monomer in the presence of a polymerization initiator in order to form a living diene elastomer;
   - modification of the elastomer by reaction with a functionalization agent with a molar ratio of the functionalization agent to the polymerization initiator ranging from 0.40 to 0.75, the functionalization agent corresponding to the following formula 1:

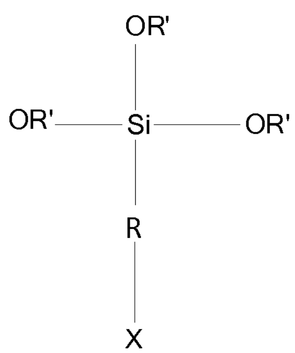

Formula 1

in which:

o R is a saturated or unsaturated, cyclic or non-cyclic, divalent $C_1$-$C_{18}$ aliphatic hydrocarbon-based radical or $C_6$-$C_{18}$ aromatic hydrocarbon-based radical, preferably a linear or branched, divalent $C_1$-$C_{18}$ aliphatic hydrocarbon-based radical, more preferentially a linear divalent hydrocarbon-based radical and more preferentially still the linear $C_2$ or $C_3$ hydrocarbon-based radical,
o X is a hydrogen atom or a function capable of interacting with a reinforcing filler,
o the R' radicals, which are substituted or unsubstituted and identical or different, represent a $C_1$-$C_{10}$, or even $C_1$-$C_8$, alkyl group, preferably a $C_1$-$C_4$ alkyl group, more preferentially methyl and ethyl.

**11.** Composition according to any one of the preceding claims, **characterized in that** the modified diene elastomer has at least one, at least two, at least three, at least four or at least five of any of the following characteristics, and preferably all of the following characteristics:

- the star-branched diene elastomer b) is a three-branched star-branched elastomer branched by a silicon atom bearing another function capable of interacting with a reinforcing filler, the silicon atom by the three branches of the diene elastomer,
- the other function capable of interacting with a reinforcing filler is a tertiary amine, more particularly a diethylamino- or dimethylamino- group,
- the spacer group is a linear $C_1$-$C_{18}$ hydrocarbon-based radical, more preferentially still the linear $C_2$ or $C_3$ hydrocarbon-based radical,
- the function comprising the silicon atom is a methoxysilane or ethoxysilane, optionally partially or completely hydrolysed to give silanol,
- the diene elastomer is a butadiene polymer, more particularly a butadiene homopolymer or a butadiene/styrene copolymer,
- the diene elastomer comprises at least 75 by weight of the linear diene elastomer functionalized predominantly in the middle of the chain a) and at most 25% by weight of the star-branched diene elastomer b), relative to the total weight of the modified diene elastomer.

**12.** Composition according to any one of the preceding claims, **characterized in that** the reinforcing filler(s) comprise(s) more than 50% by weight of the reinforcing filler(s), of reinforcing inorganic filler.

**13.** Composition according to any one of the preceding claims, **characterized in that** the plasticizing resin(s) have/has at least any one of the following characteristics, preferably all:

- a Tg of greater than 20°C, especially of greater than 30°C;
- a number-average molecular weight (Mn) of greater than 300 g/mol, especially from 400 to 1500 g/mol;
- a polydispersity index (PI) of less than 3, especially of less than 2 (as a reminder: PI = Mw/Mn, with Mw the weight-average molecular weight).

**14.** Semi-finished article made of rubber for a tyre, **characterized in that** it comprises a crosslinkable or crosslinked rubber composition according to any one of Claims 1 to 13.

**15.** Tyre, **characterized in that** it comprises a semi-finished article as defined in Claim 14.

**Fig. 1**

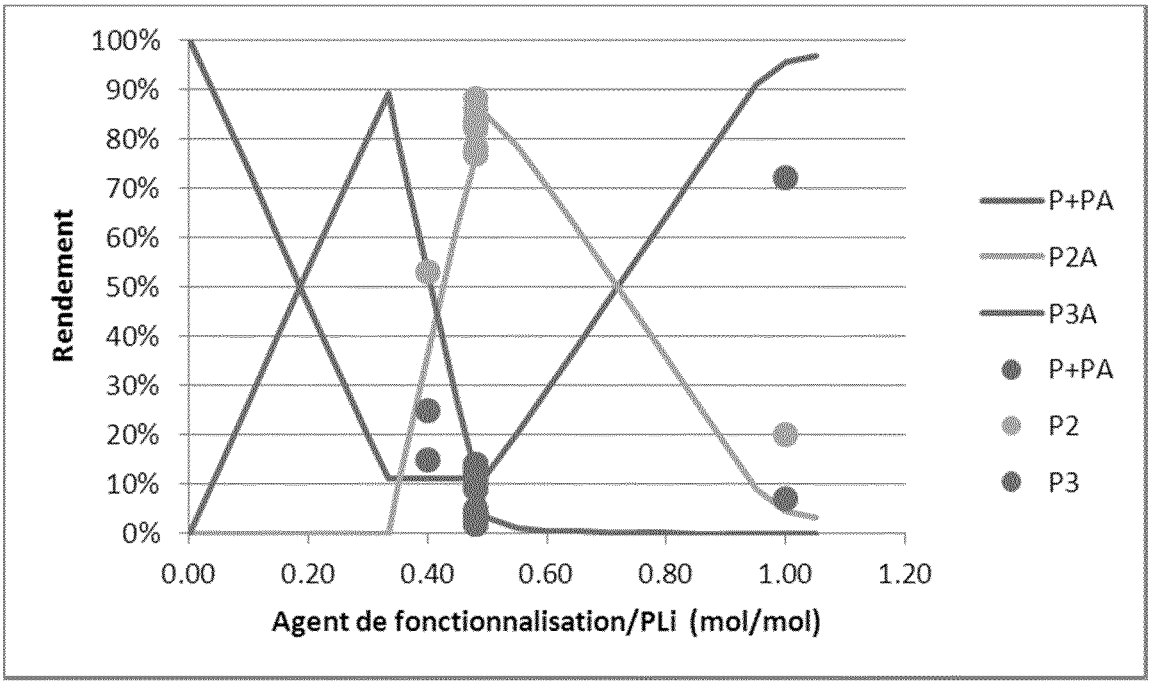
100%
90%
80%
70%
60%
50%
40%
30%
20%
10%
0%
Rendement
0.00
0.20
0.40
0.60
0.80
1.00
1.20
Agent de fonctionnalisation/PLi (mol/mol)
P+PA
P2A
P3A
P+PA
P2
P3

**Fig. 2**

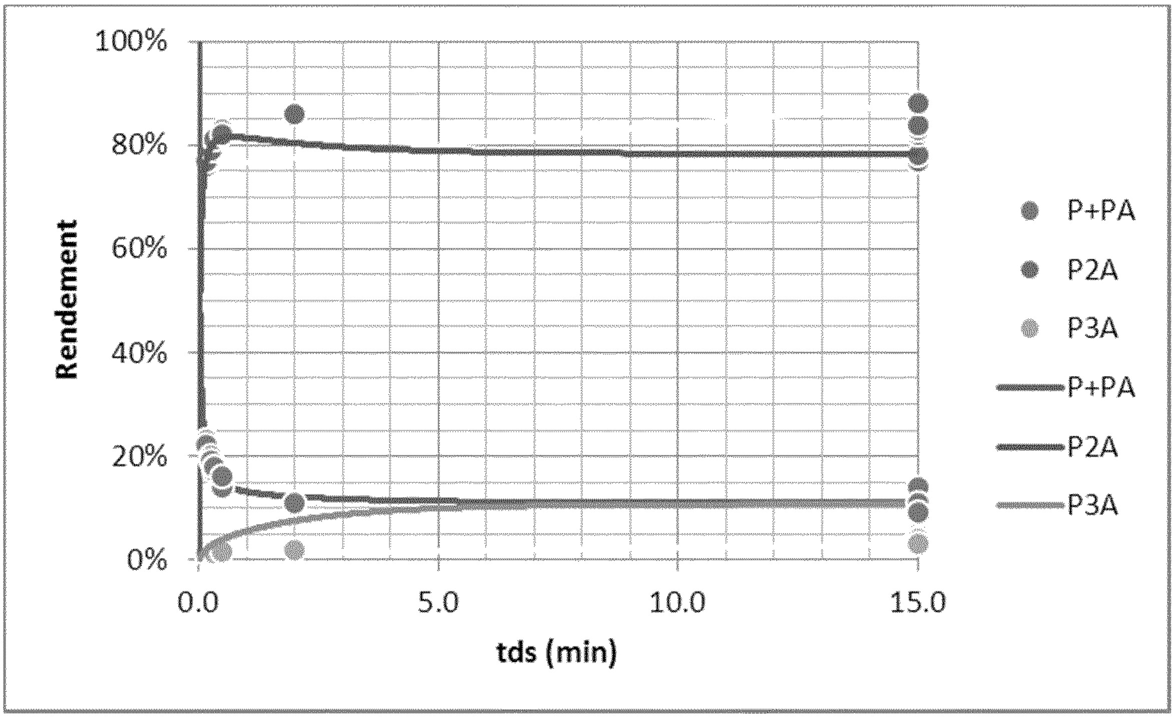
100%
80%
60%
40%
20%
0%
Rendement
0.0
5.0
10.0
15.0
tds (min)
P+PA
P2A
P3A
P+PA
P2A
P3A

# Fig. 3

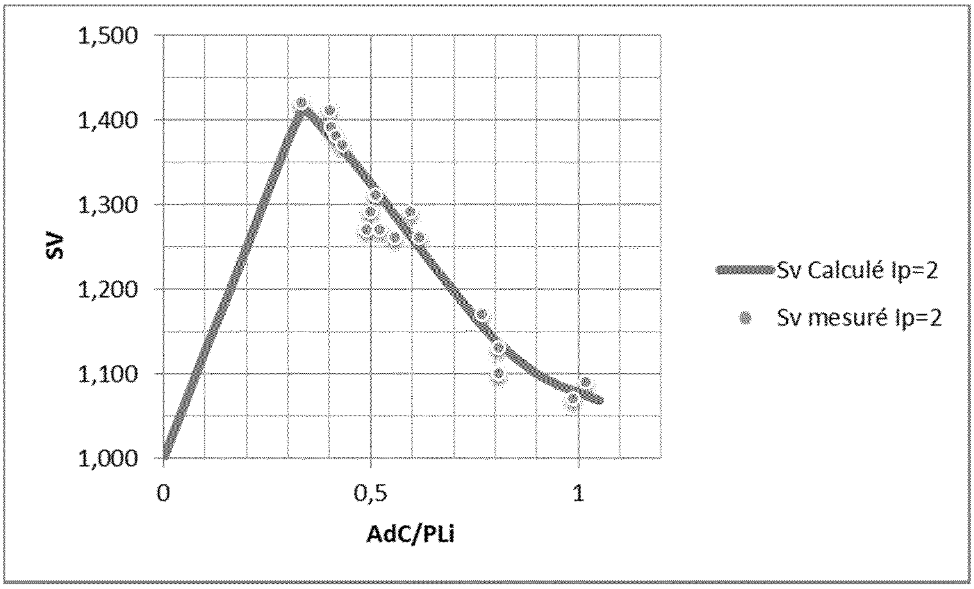
SV
1,500
1,400
1,300
1,200
1,100
1,000
0
0,5
1
AdC/PLi
Sv Calculé Ip=2
Sv mesuré Ip=2

# Fig. 4

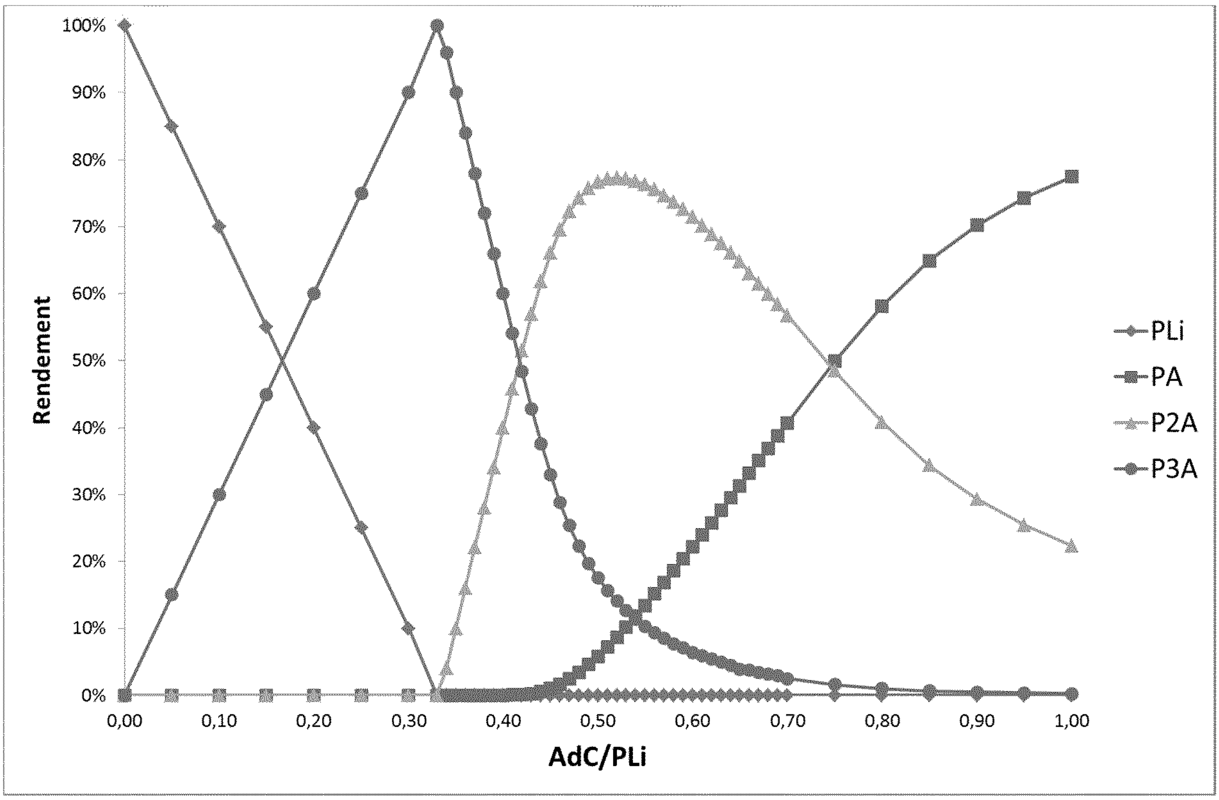
Rendement
100%
90%
80%
70%
60%
50%
40%
30%
20%
10%
0%
0,00
0,10
0,20
0,30
0,40
0,50
0,60
0,70
0,80
0,90
1,00
AdC/PLi
PLi
PA
P2A
P3A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2007047943 A1
- EP 0692492 A1
- EP 0692493 A1
- WO 2009133068 A1
- WO 2015018599 A1
- EP 2266819 A1
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A


### Littérature non-brevet citée dans la description


- **T. W. GREEN ; P. G. M. WUTS.** Protective Groups in Organic Synthesis. 1999
- **R. MILDENBERG ; M. ZANDER ; G. COLLIN.** Hydrocarbon Resins. VCH, 1997
- **VILMIN, F. ; DUSSAP, C. ; COSTE, N.** Applied Spectroscopy. 2006, vol. 60, 619-29
- **VILLERMEAUX, J.** *Génie de la réaction chimique,* 1993